# EUROPEAN PATENT SPECIFICATION

(11) **EP 4 058 357 B1**
(45) Date of publication and mention of the grant of the patent: **01.10.2025**
(21) Application number: 20801286.4
(22) Date of filing: 10.11.2020
(51) Int. Cl.: B64D 13/02, B64D 13/06, A62B 7/14

(54) **VENTILATION APPARATUS FOR AIRCRAFT**
BELÜFTUNGSVORRICHTUNG FÜR FLUGZEUGE
APPAREIL DE VENTILATION POUR AÉRONEF

(30) Priority: 12.11.2019 EP 19208706
(43) Date of publication of application: 21.09.2022
(73) Proprietor: Aviation Works Limited, London E2 8DD (GB)
(72) Inventor: WAKEFORD, Tim, London E2 8DD (GB); BOYLE, Rob, London E2 8DD (GB)
(74) Representative: Gill Jennings & Every LLP
(86) International application number: PCT/EP2020/081664
(87) International publication number: WO 2021/094323

(56) References cited:
- US-A1- 2010 012 124
- US-A1- 2018 290 757
- US-B1- 10 226 591

## Description

### Field of the Invention

The present invention relates to an apparatus for preparing a ventilation gas mixture to aircraft pilots and crew members.

### Background

Research has shown that there are significant benefits in terms of blood oxygenation, from introducing relatively small percentages of carbon dioxide into the ambient air at high altitude which effectively lowers the "apparent" altitude of the ambient air. For example, adding 11% ± 5% carbon dioxide in place of nitrogen at 21,000 ft (6401 m) (whilst retaining the normal 21% oxygen), provides the human subject with similar brain tissue oxygenation levels as that of between 12,000 ft (3658 m) and 14,000 ft (4267 m) altitude.

Operation of combat aircraft at increased positive normal acceleration causes the crew to experience increased so called "G-force". G-force normally refers to the acceleration experienced when an aircraft is moved aggressively in the pitch axis, whereby the apparent weight of the aircraft occupants is significantly increased. A G-tolerance is the ability of a living subject to be exposed to G-forces without noticeable, or at least severe, consequences. High G-forces are therefore experienced by crew members of combat aircrafts due to increased accelerations and/or narrow flight radii, but may also be experienced in other aircrafts, vehicles, simulators and the like.

During aircraft manoeuvring, combat aircraft are capable of changing heading very rapidly, which is generally achieved by rolling the aircraft to the desired bank angle and pulling back on the inceptor to generate an aircraft pitch rate. This is most often used for fighter aircraft in order to obtain a weapons solution onto the enemy aircraft, but is regularly used on other combat aircraft (e.g. tactical bombers, reconnaissance aircraft, and combat training aircraft), in order to remain below radar detection or to evade enemy fire, or train for those scenarios. The ability to safely achieve a higher G-force, through increased G-tolerance, provides a tactical advantage to a combat aircraft since it can enable faster weapons targeting or evasion from enemy fire.

Exposure to high G-forces causes the blood in a human body to be "pulled" towards the feet, and thus starving the brain of oxygen. As the G-force increases, the effect becomes more pronounced, initially with greying or tunnelling of vision, through the eventual loss of consciousness. Additionally, rapid application of G-force, even to lower levels, can cause sudden loss of consciousness. This loss of consciousness is generally referred to as G-induced Loss of Consciousness (GLoC). When this loss of consciousness happens to a pilot close to the ground, or with the aircraft velocity vector towards the ground, it can have catastrophic outcome.

Furthermore, repeated exposure to even moderate levels of elevated G-forces causes fatigue in aircrew which, over the course of a flight, can result in poor crew judgement or failure to complete mandatory tasks, e.g. missing items on a check list, or failing to notice fuel levels falling below a minimum level. Although clearly more benign than a GLoC event, this fatigue can still lead to catastrophic outcomes, especially when coupled with the complex tasks required to operate modern combat aircraft in busy airspace environments.

It would be advantageous to provide a system which is able to mitigate the effects of high G-forces on aircraft crew.

US2010/012124 describes a rebreather safety monitoring device comprising a carbon dioxide sensor provided with a gas sampler adapted for sampling a gas in a rebreather breathing loop from a location between an inhale one-way valve on a rebreather mouthpiece and a carbon dioxide scrubber and providing the obtained gas sample to the carbon dioxide sensor.

US10226591 describes a system, method, and device for treating sleep disorders.

US 2018/290757 A1 discloses an n onboard rebreathing loop system resident on an aircraft for providing oxygen to aircraft personnel. The system includes a ceramic oxygen generating system (COGS) module configured to receive an inlet air and output a high purity oxygen (O2) gas into a breathing loop and a carbon dioxide (CO2) scrubber module configured to receive exhaled air from the aircraft personnel and output a CO2-scrubbed air into the breathing loop. The high purity O2 gas and CO2-scrubbed air are mixed to form a mixed gas having a partial pressure of O2 suitable for breathing by the aircraft personnel.

### Summary of Invention

According to a first aspect there is provided an apparatus for preparing a ventilation gas mixture for pilots and crew of aircraft, comprising a first gas mixer feed configured to receive exhaled air from a person, wherein the exhaled air comprises carbon dioxide, and a second gas mixer feed configured to receive an air mixture comprising at least one gas. The apparatus also includes a gas mixing device configured to receive the exhaled air comprising carbon dioxide and the air mixture from the first and second gas mixer feeds and combine the exhaled air with the air mixture in the gas mixing device to form a ventilation gas mixture. A pressure adjuster is configured to increase the pressure of the exhaled air in the first gas mixer feed so that it substantially matches the pressure of the air mixture in the second gas mixer feed.

The air mixture being supplied via the second gas mixer feed is typically supplied under pressure. However, the exhaled air will not be under pressure. This means that low pressure exhaled air is entering a system which is providing high pressure breathing air to the user. The pressure adjuster therefore increases the pressure of the exhaled air. In particular, the pressure of the exhaled air is increased until it matches the pressure of the air mixture. The pressure of the air entering the gas mixing device from the first gas mixer feed and the second gas mixer feed is therefore substantially the same, allowing for easy mixing of the gases, namely the exhaled air from the first gas mixer feed and the air mixture from the second gas mixer feed. Furthermore, mixing a plurality of gases together at substantially the same pressure allows for more accurate gas mixing. Mixing a combination of exhaled air, containing increased levels of carbon dioxide as a result of the user exhaling, with the air mixture in the gas mixing device has the effect of increasing the proportion of carbon dioxide present in the ventilation gas mixture which is supplied to the user. Thus, a ventilation gas mixture with carbon dioxide levels increased to the desired quantity can be prepared.

Preferably, the pressure adjuster comprises a regulator. The regulator may be configured to supply at least one gas at under pressure to the second gas mixer feed. In general, aircraft comprise regulators which can supply gas, for example oxygen, to the wearer of the ventilation mask. By using the regulator as the pressure adjuster, no additional components or equipment needs to be provided in the aircraft in order to adjust the pressure of the exhaled air. This helps keep the weight of the aircraft to a minimum. Additionally, by using equipment already provided in aircraft to perform an the additional function of adjusting the pressure of the exhaled air, as well as supply gas to the ventilation mask, current aircraft will require little modification to be able to use the apparatus described herein. Thus, the apparatus described herein can be retrofit to existing aircraft.

The first gas mixer feed may comprise a gas reservoir configured to receive the exhaled air from a person and store the exhaled air within the gas reservoir before the exhaled air is received by the gas mixing device. Thus, the gas reservoir may be configured to receive the exhaled air from a person and store the exhaled air within the gas reservoir before the exhaled air is combined in the gas mixing device. The provision of a reservoir may enable larger quantities of exhaled air to be captured by the apparatus than could be achieved if there was no gas reservoir present. This may enable larger quantities of air to be supplied to the gas mixing device and consequently used to produce the ventilation gas mixture. Furthermore, being able to store the exhaled air within the gas reservoir before it is sent to the gas mixing device allows for a storage or reserve supply of exhaled air to be built up, which can be used later to form the ventilation gas mixture as needed. Thus, the user is not required to continually exhale into the apparatus in order for the ventilation gas mixture to be produced. Instead, if the user was unable to exhale into the apparatus, the apparatus could use the captured and stored exhaled air from the gas reservoir to supply the gas mixing device and produce the required ventilation gas mixture. A constant supply of ventilation gas mixture to the user can therefore be provided.

Preferably, the pressure adjuster is configured to adjust the pressure of the exhaled air stored within the gas reservoir. The exhaled air stored within the gas reservoir is therefore ready to be used to form the ventilation gas mixture as soon as it leaves the gas reservoir. This avoids the need for adjusting the pressure of the exhaled air after it has left the gas reservoir and before it has entered the gas mixing device. Thus, while the exhaled air is being stored within the gas reservoir, it can have its pressure adjusted to the desired level. This results in an efficient use of preparation time.

The regulator may be configured to adjust the pressure of the exhaled air stored within the gas reservoir by supplying at least one gas at high pressure to the gas reservoir via a gas reservoir inlet. Using a regulator to adjust the pressure, in particular increase the pressure, of the air stored within the gas reservoir avoids the need for additional components or equipment to be provided in the aircraft in order to adjust the pressure of the exhaled air, as the aircraft will typically include a regulator. The gas reservoir may therefore be retro-fitted to existing aircraft.

In some examples, the pressure adjuster may further comprise an external gas reservoir in fluid communication with the regulator. The external gas reservoir may be configured to adjust the pressure, preferably increase the pressure, of the exhaled gas before it enters the gas mixing device.

The external gas reservoir may be positioned adjacent to the external surface of the gas reservoir. The external gas reservoir may therefore be arranged to adjust the pressure of the exhaled gas within the gas reservoir. Providing an external gas reservoir may therefore allow the apparatus described herein to be retro-fitted to existing ventilation systems which may comprise a gas reservoir for collecting air exhaled from the wearer of the ventilation mask.

Preferably, the external reservoir is configured to substantially surround the external surface of the gas reservoir. This ensures that a large surface area of the gas reservoir is in contact with the external gas reservoir. Furthermore, by substantially surrounding the gas reservoir, the external gas reservoir is in contact with the external surface of the gas reservoir substantially evenly across the whole of the external surface of the gas reservoir.

The regulator may be configured to supply at least one gas at high pressure to the external gas reservoir such that the pressure of the gas stored within the gas reservoir is increased. The external gas reservoir may therefore be arranged to compress the gas reservoir, i.e. apply a pressure to the gas reservoir, so that the pressure of the exhaled air within the gas reservoir increases. Advantageously, the external gas reservoir may therefore be retro-fit to existing ventilation systems which may comprise a gas reservoir for collecting air exhaled from the wearer of the ventilation mask, such that the pressure of the exhaled air can be adjusted, preferably increased.

In some cases, the gas reservoir may comprise a filter system configured to store carbon dioxide from the exhaled air. The filter system may be configured to release the stored carbon dioxide to the first gas mixer feed. The apparatus provides a ventilation gas mixture with relatively small quantities carbon dioxide added within the breathing air of aircraft that regularly operate at increased levels of G-force and extreme high altitude. This is achieved by re-using exhaled carbon dioxide from the user's breath and mixing it with the breathing air to form the ventilation gas mixture. The use of the filter system therefore helps to extract the carbon dioxide from the exhaled air so that it can be supplied to the gas mixing device in order to produce the ventilation gas mixture.

The filter system may comprise a first filter configured to store carbon dioxide from the exhaled air and a second filter configured to release stored carbon dioxide to the first gas mixer feed. The first filter and second filter may be arranged to carry out their respective functions substantially simultaneously. This means that when one filter is storing carbon dioxide from the exhaled air, the other filter is supplying its stored carbon dioxide to the gas mixing device, at the same time. This means that once the supplying filter has been emptied of carbon dioxide there will be another filter that has been filled with carbon dioxide, ready to supply to the gas mixing device. Using more than one filter within the filter system therefore allows different filters to be carrying out different functions to each other for example one filter is capturing and storing whilst another is releasing. However, in some cases, all the filters may be carrying out the same function for example they may all be capturing and storing or they may all be releasing.

Preferably, the regulator may be configured to supply at least one gas at high pressure to the second filter such that the pressure of the released carbon dioxide entering the first gas mixer feed is increased. Using the regulator to increase the pressure of the released carbon dioxide reduces the number of overall components needed in the apparatus. This helps reduce the overall complexity of the ventilation apparatus as well as keeping the overall weight of the system to a minimum.

In some examples, the gas reservoir may comprise an intermediate gas storage device configured to receive the stored carbon dioxide from the filter system and temporarily store the carbon dioxide. Preferably, the intermediate gas reservoir may be further configured to release the stored carbon dioxide to the first gas mixer feed.

The intermediate reservoir may therefore be arranged downstream of the filter system but upstream of the gas mixing device. The intermediate reservoir may be particularly constructed in such a manner that the temporarily stored carbon dioxide can be discharged at intervals to the gas mixing device.

In some cases, the second gas mixer feed may comprise a nitrogen filter configured to store nitrogen from air received from the second gas mixer feed. The nitrogen filter may be further configured to exhaust nitrogen reduced air from an outlet in the nitrogen filter and supply the nitrogen reduced air to the gas mixing device via the second gas mixer feed.

According to another aspect there is provided an aircraft comprising an apparatus for preparing a ventilation gas mixture for pilots and crew as described above.

According to another aspect there is provided a method of preparing a ventilation gas mixture for us in an aircraft comprising the steps of: (i) receiving, by a first gas mixer feed, exhaled air from a person, wherein the exhaled air comprises carbon dioxide; (ii) receiving, by a second gas mixer feed, an air mixture comprising at least one gas; (iii) increasing, by a pressure adjuster, the pressure of the exhaled air comprising carbon dioxide in the first gas mixer feed so that it substantially matches the pressure of the air mixture in the second gas mixer feed; (iv) receiving, by a gas mixing device, the exhaled air and the air mixture from the first and second gas mixer feeds; and (v) combining, by the gas mixing device, the exhaled air with the air mixture to form a ventilation gas mixture.

The present invention, which uses carbon dioxide within the breathing air of aircraft that regularly operate at increased levels of G-force and extreme high altitude, provides a number of advantages.

Firstly, there is an increased G-force tolerance. This is because the addition of carbon dioxide in relatively small quantities prioritises the body's blood flow to the brain. This effect, coupled with the body's ability to absorb oxygen into the tissue, means that there is a measureable improvement in G-Force tolerance. In some cases, this improvement may be approximately 1g of additional G-force tolerance. This effect can be combined with existing G-force mitigation strategies in order to achieve a summing effect. Increasing the peak G-force tolerance of an individual will generate a tactical advantage to the aircraft, whilst also reducing the risk of GLoC.

A second advantage is reduced fatigue during exposure to G-forces. As mentioned above, repeated exposure to increased G-forces is fatiguing. This fatigue, along with the fact that operating combat aircraft is a challenging and complex task, means that mistakes are more likely, which can sometimes reduce safety margins. The enhanced brain oxygenation achieved through the addition of carbon dioxide within the breathing air, will mean that aircrew are less fatigued by repeated G force events, and therefore capable of higher cognitive performance over longer periods of time. This effect further increases operational safety and enables a more effective war to be fought.

A further advantage is the increased survivability during rapid or explosive cabin depressurisation. Adding carbon dioxide to the breathing air enhances oxygenation of the brain, and so an individual, having pre-breathed carbon dioxide enhanced air prior to a rapid depressurisation event, will improve the body's ability to maintain consciousness. At altitudes above 40,000 ft (12192 m), the partial pressure of oxygen, even with 100% oxygen, is lower than at sea level. The addition of carbon dioxide to the breathing air provides additional protection to the brain and reduces the likelihood of hypoxia during this extremely hazardous emergency.

Modern fighter aircraft typically use 100% oxygen supplied from a Molecular Sieve Oxygen Control System (MSOCS) to ventilate the crew. During rapid breathing (often caused by operations at high physical exertion or stress, such as air combat), crew can hyperventilate, which has the tendency to flush out the carbon dioxide from their blood. This can result in similar symptoms to hypoxia and in extreme cases can lead to loss of consciousness.

The addition of carbon dioxide into the breathing mixture alleviates the risk of hypocapnia, by preventing, or at least reducing, the flushing of carbon dioxide from the blood. The present invention therefore helps alleviate the risk of hypocapnia in aircraft crew.

The present invention therefore provides an apparatus which improves the combat aircraft crew's ability to withstand the effects of G force.

### Brief Description of the Drawings

Embodiments of the present invention will now be described by way of example only with reference to the accompanying drawings in which:
Figure 1 shows a schematic view of a first example apparatus for preparing a ventilation gas mixture;
Figure 2 shows a schematic view of a second example apparatus for preparing a ventilation gas mixture;
Figure 3 shows a schematic view of a third example apparatus for preparing a ventilation gas mixture;
Figure 4 shows a schematic view of a first carbon dioxide filtration system;
Figure 5 shows a schematic view of a second carbon dioxide filtration system;
Figure 6 shows a schematic view of a fourth example apparatus for preparing a ventilation gas mixture;
Figure 7 shows a schematic view of a part of another example apparatus for preparing a ventilation gas mixture;
Figure 8 shows a schematic view of a first nitrogen filtration system; and
Figure 9 shows a schematic view of a second nitrogen filtration system;
Figure 10 shows a comparison between aircraft altitude with cabin altitude and nominally minimum crew oxygen percentage; and
Figure 11 shows a nominal schedule of carbon dioxide for a given aircraft and cabin altitude.

### Specific Description

In general, combat aircraft cabin altitude is much higher than that of a passenger aircraft. Whereas a passenger aircraft would maintain a cabin altitude of between 6000 ft (1829 m) and 8000 ft (2438 m), once a combat aircraft reaches approximately 8000 ft (2438 m), it holds a constant cabin pressure until a differential of 5 PSI (34.5 kPa) has built up between the cabin and the atmospheric pressure, and then holds a continual 5 PSI (34.5 kPa) pressure differential as altitude further increases. This means that combat aircraft crew are exposed to far higher cabin altitudes and so require an increased oxygen percentage within the breathing gas in order to maintain sufficient partial pressure of oxygen.

Legacy combat aircraft provide the crew with a gas mix with sufficient partial pressure of oxygen, by mixing 100% oxygen, either from stored or onboard generated oxygen supplies, with the ambient air via a regulator mounted on the ejection seat or life vest. In the event an explosive or rapid depressurization of the cabin, the system detects the reduction in pressure, and increases the partial pressure of oxygen to suit the ambient conditions. Modern combat aircraft use a Molecular Sieve Oxygen Concentration System (MSOCS), which takes high pressure bleed air from the engine compressor to generate nominally 100% O₂, which is fed directly to the crew. For legacy aircraft the maximum achievable partial pressure of oxygen is 100%, however, more modern aircraft are able to provide pressure breathing to further increase the partial pressure of oxygen, providing enhanced protection at altitudes above 40,000 ft (12192 m). Pressure breathing involves providing ventilation air to a user, through a ventilation mask, at an increased pressure. The increased pressure forces air into the user's lungs which increases gas exchange taking place within the lungs. The user is therefore able to more efficiently use oxygen within the air if it has been supplied under pressure.

As mentioned, to increase blood oxygenation small percentages of carbon dioxide can be introduced into the air breather by the user.

The applicant has found that introducing a low volume of carbon dioxide to the ventilation air mix significantly improved test participants' brain blood oxygen levels as compared to breathing normal air. It is believed that this effect occurs because the addition of carbon dioxide within the breathing air has three key effects. Firstly, it increases the active lung capacity, creating a larger cross-sectional area for oxygen to pass from the lung into the blood. Secondly, it increases the brain tissue's affinity for oxygen allowing oxygen to transfer into the tissue, more easily. Thirdly, it constricts the blood vessels to the body's extremities and dilates the vessels in the brain, increasing blood flow to the brain tissue.

As a result of these effects, it is believed that the G-tolerance of living subjects may be influenced by the amount of carbon dioxide supplied to the living subject. Adding a small percentage of carbon dioxide to breathing air allows a living subject to be exposed to higher accelerations, i.e. tolerance to G-forces increases, as well as reducing fatigue during G-force exposure.

The present description relates systems and apparatuses used to provide a ventilating gas mixture comprising small amounts of carbon dioxide to a user, in order to enhance the G-tolerance of the user. In particular, relatively small quantities of carbon dioxide are added to the ventilation air, in order to allow the human body to better absorb and utilise oxygen, prioritising oxygenation of the brain, and mitigate the effects of g-forces and hypocapnia.

There are several methods by which this ventilation gas mixture, with additional carbon dioxide, can be produced. For example, one method of producing the ventilation gas requires carbon dioxide to be mixed into the breathing air in lieu of nitrogen in order to preserve the relative percentage of oxygen within the breathed air. Failure to do this (i.e. remove nitrogen after carbon dioxide has been added to the breathing air) would result in the partial pressure of oxygen being reduced, especially at altitude, and could therefore contribute to reduced G-force tolerance.

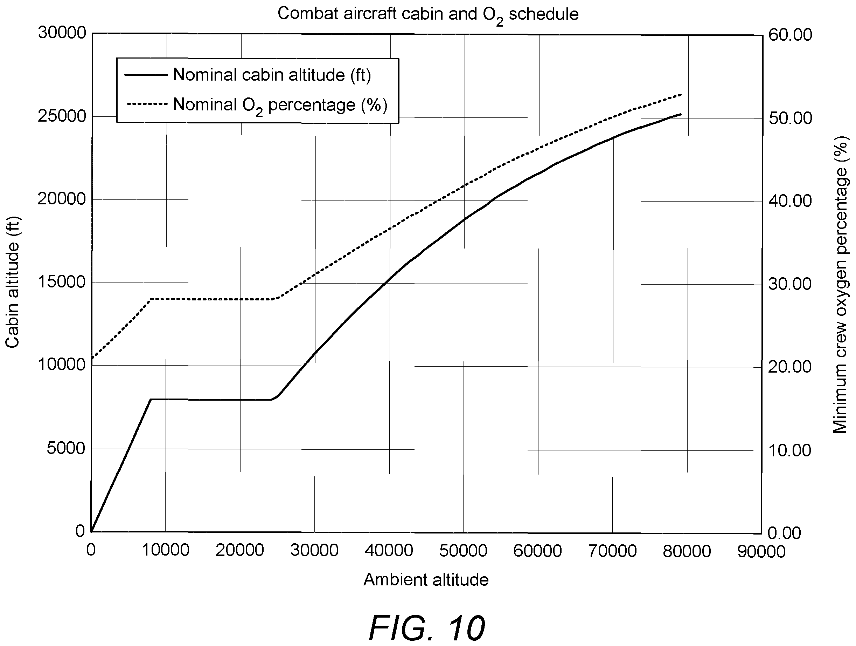

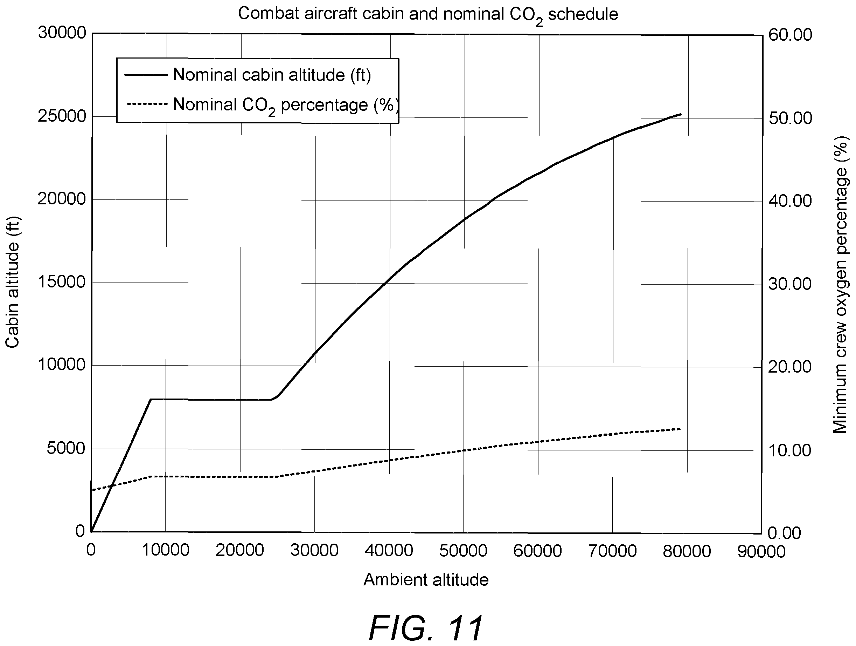

It should be noted that the requirement for only displacing nitrogen generally applies to legacy aircraft ventilation systems where the oxygen percentage nominally follows the schedule shown in Figure 11. For legacy systems where 100% oxygen is not used throughout the flight envelope the oxygen level may require increasing to ensure that it maintains the nominal schedule in Figure 10. However, since the addition of carbon dioxide improves brain oxygenation, this may not be necessary in legacy systems.

For modern systems, the apparatus will typically be providing 100% oxygen from the regulator 3, and so the additional carbon dioxide can be added straight into the gas mix, displacing the oxygen (because there is an abundance of it).

There are three main methods of increasing the amount of oxygen provided in the breathing air mixture.

The first method of increasing the proportion of oxygen in the breathing air mixture, as altitude increases, involves modifying the aircraft respiration regulator in order to change the oxygen O2 schedule as presented in Figure 10, so that a larger partial pressure of oxygen is provided. Once the carbon dioxide has been added to the air mixture, the oxygen partial pressure is slightly displaced and returns to the nominal partial pressure provided in Figure 10.

The second method involves adding small quantities of oxygen to the gas mix downstream of the existing crew respiration regulator provided in the aircraft. This oxygen could be supplied from a pressurised reservoir, a liquid oxygen reservoir, or a MSOCS.

The third method filters small quantities of nitrogen from the respiration system by means either a Temperature Swing Adsorption (TSA) or Vacuum/Pressure Swing Adsorption (V/PSA) filter system as will be described in more detail later.

The following description will explain how exhaled carbon dioxide from the user's exhaled breath can be re-used and re-circulated back into the breathing air, to form carbon dioxide enriched air, which is used to make the ventilation gas mixture. This ventilation gas mixture is then passed to the ventilation mask to be inhaled by the user.

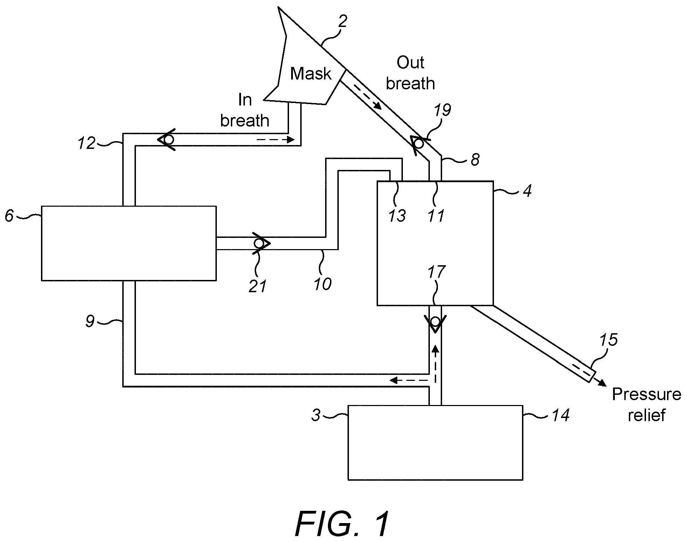

Figure 1 illustrates an apparatus 1 for enriching the air breathed by individuals with carbon dioxide. The apparatus 1 comprises a ventilation mask 2, a gas reservoir 4, and a gas mixing device 6 which are fluidly connected to each other via a number of gas feeds. In this context, the term gas also refers to gas mixtures or also gases or gas mixtures as a product of chemical reaction. The apparatus also comprises a pressure adjuster 14 which is configured to adjust the pressure of the exhaled air received in the gas reservoir 4. A regulator 3 is provided, in fluid communication with both the gas reservoir 4 and the gas mixing device 6.

As discussed, pressure breathing is used in aircraft to increase the partial pressure of oxygen. The breathing air supplied to the ventilation mask 2 from the regulator and inhaled by the user is therefore supplied under pressure. However, once the air has been exhaled by the user into the gas reservoir 4, it will not be under pressure. This means that low pressure exhaled air is entering a system which is providing high pressure breathing air to the user. The pressure adjuster 14 is therefore arranged to increase the pressure of the exhaled air within the gas reservoir 4. In particular, the pressure of the exhaled air is increased until it matches the pressure of the ventilation gas mixture initially breathed in by the user and supplied by the regulator 3.

During periods of pressure breathing, high pressure air is supplied from the regulator 3, to the gas mixing device 6 (and then further supplied to the ventilation mask 2) but also to the gas reservoir 4 in order to equalise the pressure of the air within the gas reservoir 4 so that it matches that of the regulator air. The gas mixing device 6 therefore receives air from both the gas reservoir 4 via the first gas mixer feed 10 and the regulator 3 via the second gas mixer feed 9. Having both gas feeds (from the regulator 3 and the gas reservoir 4) supply air to the gas mixing device 6 allows for easier and more accurate gas mixing.

Generally, during operation, a user initially inhales the air from the gas mixing device 6 through the ventilation mask 2 which supplies the breathing air mixture to the user from the regulator 3. This initially supplied breathing air mixture supplied from the gas mixing device 6 is identical to the regulator air supplied from the regulator 3 and generally comprises a mixture of nitrogen and oxygen, the relative amounts of each gas dependent on the altitude. As the altitude of the aircraft increase, the proportion of oxygen in the breathing air mixtures increases while the proportion of nitrogen in the breathing air mixture decreases, until a point is reached where 100% oxygen is supplied to the user. The user then exhales into the gas reservoir 4, through the ventilation mask 2 and the exhaled air (typically comprising a mixture of oxygen, carbon dioxide, and nitrogen) is received and captured by the gas reservoir 4 via a gas inlet 8 and temporarily stored in the gas reservoir 4. The exhaled air passing into the gas reservoir 4 from the ventilation mask 2 will have converted around 4% oxygen into around 4% carbon dioxide. This conversion is carried out by the human body in the lungs as part of the normal breathing process.

The apparatus 1 then mixes a combination of gas reservoir 4 gas, containing increased levels of carbon dioxide as a result of the user exhaling, and regulator air in the gas mixing device 6. This mixing of air supplies has the effect of increasing the proportion of carbon dioxide present in the air received from the regulator 3 and supplied to the ventilation mask 2. Thus, an air mixture with carbon dioxide levels increased to the desired quantity is supplied to the ventilation mask 2, compared to air supplied straight from the regulator 3 and not mixed with the exhaled air.

Before the captured exhaled air is released from the gas reservoir 4 into the first gas feed 10, the pressure adjuster 14 adjusts the pressure of the exhaled air within the gas reservoir 4. Once the exhaled air has reached the desired pressure, the exhaled air is released from the gas reservoir 4 and subsequently received by the gas mixing device 6 via the first gas feed 10. The gas mixing device 6 then combines this exhaled air with from the regulator via the second gas feed 9, this air being supplied to the gas mixing device 6 at the same pressure as the pressure adjusted exhaled air being supplied via the first gas mixer feed 10, in order to prepare a ventilation gas mixture. This ventilation gas mixture is then fed, via an outlet 12, back into the ventilation mask 2 to be inhaled by the user. For legacy aircraft, the composition of the ventilation gas mixture is dependent on the altitude and/or pressure as per Figure 10. However, in modern combat aircraft the composition of the ventilation gas is often 100% O₂ at all altitudes (dependent upon aircraft design).

As can be seen in Figure 1, the gas reservoir 4 takes the form of a rebreather bag, which may also be referred to as a storage bag, having three openings, a first opening 11 connected to the gas inlet 8, a second opening 13 connected to the first gas mixer feed 10, and a third opening 17 connected to the pressure adjuster 14. Exhaled air from the ventilation mask 2 flows in to the gas reservoir 4 through the first opening 11 and out of the gas reservoir 4 through the second opening 13.

The gas reservoir 4 is typically made from a flexible cloth having a webbing structure in order to provide strength to the gas reservoir so that it can withstand high pressures. This flexible cloth would typically include an internal airtight coating to prevent gas from leaking or permeating through the gas reservoir 4 into the surroundings. This internal airtight coating could be made from any suitable material, for example plastic, rubber, or silicon. Importantly, the gas reservoir 4 must be strong enough so that it can withstand high wind loading during a high-speed ejection event, in which the user is ejected at high-speed from the aircraft. Failure of the gas reservoir 4 to be able to survive this event would result in the loss of emergency oxygen being supplied to the user at high altitudes.

Thus, in the example shown in Figure 1, the carbon dioxide present in the exhaled air is used to provide the additional carbon dioxide to be combined with the air supplied by the regulator 3 and supplied to the ventilation mask 2.

In a first example apparatus design, for example the apparatus 1 illustrated in Figure 1, the regulator 3 acts as the pressure adjuster 14. The regulator is configured to supply a high pressure air mixture, comprising at least one gas, to the gas reservoir via the third opening 17. This has the effect of increasing the pressure of the exhaled air contained within the gas reservoir 4. The pressure of the exhaled air in the gas reservoir 4 is increased until it substantially matches that of the air being supplied from the regulator 3.

Thus, in this example, the air contained within the gas reservoir 4 is directly pressurised, as the air from the regulator 3 is fed directly into the gas reservoir 4 to increase the pressure inside the gas reservoir 4. Directly feeding air from the regulator 3 into the gas reservoir 4 therefore has the effect of pressurising the gas reservoir 4 contents before they are used to form the ventilation gas mixture. However, a downside of this configuration is that the air contained within the gas reservoir 4 is diluted by the regulator air and so the relative proportion of carbon dioxide present in the exhaled air is reduced.

In this example, increasing the pressure of the exhaled air is achieved by passing high pressure air (i.e. air at the desired pressure) into the gas reservoir 4 through the third opening 17 in order to apply pressure to the gas reservoir 4. This has the effect of compressing the gas reservoir 4, so the pressure of the exhaled air within the gas reservoir 4 is increased to the desired pressure. A pressure valve located at the first 11 opening of the gas reservoir 4 is closed so that the pressure of the exhaled air contained within the gas reservoir 4 can be increased. The first pressure valve 19 located at the first opening 11 is a non-return valve which allows exhaled gas from the ventilation mask to enter the gas reservoir 4 but prevents air within the gas reservoir 4 from exiting the gas reservoir 4 and flowing back towards the ventilation mask when the gas reservoir 4 is under pressure. The first pressure valve 19 is opened, while a second valve 21 is closed, to allow the exhaled air to flow into the gas reservoir 4. The second pressure valve 21 is also a non-return valve which prevents exhaled gas within the gas reservoir 4 from exiting the gas reservoir 4 out of the second opening 13 and flowing towards gas mixing device 6, before the exhaled air has reached the desired pressure. This second valve 19 is then closed and the regulator 3 pressurises the gas reservoir 4 to the desired pressure. The second valve 21 is then opened and the pressurised exhaled air exits the gas reservoir 4 into the first gas mixer feed 10. The opening and closing of the valves can be controlled by a computer control system or simply by the balancing of air pressure either side of the non-return valves 19, 21. If the gas reservoir 4 becomes full, or the pressure within the gas reservoir becomes too high, excess gas can be released via the pressure release valve 15.

In some developments, the apparatus 1 comprises a moisture removal system, for example a moisture filter, located downstream of the ventilation mask 2 and upstream of the first pressure valve. The moisture removal system acts to remove moisture from the exhaled air, before it enters the gas reservoir 4, in order to minimise the risk of icing or component damage within the apparatus 1 and ventilation system.

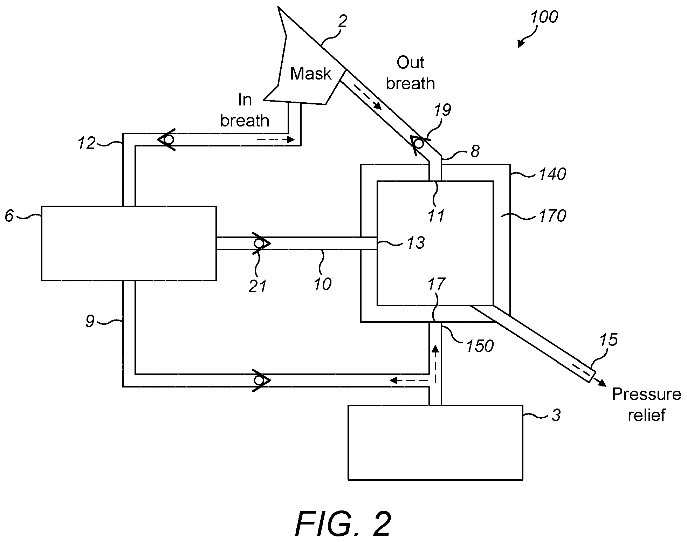

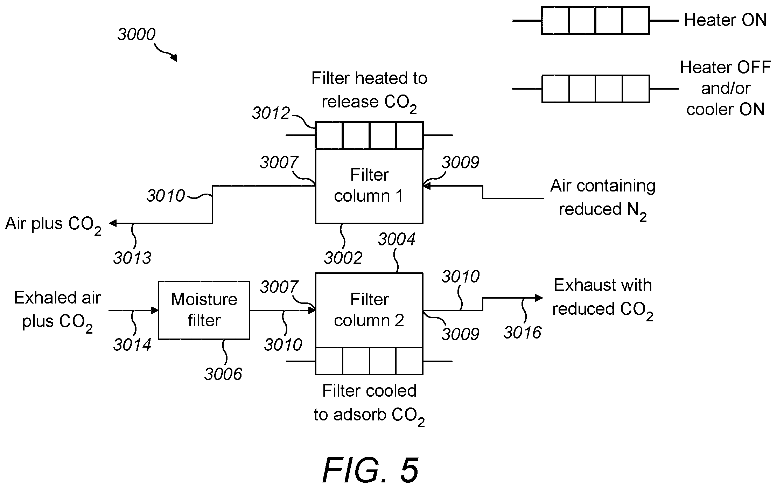

Figure 2 shows another example apparatus 100, wherein the same reference numerals are used to represent the same features as those in Figure 5. The pressure adjuster 140 shown in Figure 2 takes the form of a bladder system. The bladder system comprises a bladder 170 which takes the form of a bag 170 having an inlet 150 so that gas can flow into and out of the bladder 170. The bladder 170 is located next to the external surface of the gas reservoir 4, and substantially surrounds the entire of the external surface of the gas reservoir 4. The gas reservoir 4 may therefore be thought of as being located within the bladder 170.

As before, the pressure adjuster 140 is arranged to increase the pressure of the exhaled air within the gas reservoir 4, until the pressure of the exhaled air matches the pressure of the ventilation gas mixture initially breathed in by the user and supplied by the regulator 3.

In this example, this is achieved by passing high pressure air (i.e. air at the desired pressure) through the bladder 170, via the bladder inlet 150, in order to apply pressure to the gas reservoir 4. This has the effect of compressing the gas reservoir 4, so the pressure of the exhaled air within the gas reservoir 4 is increased to the desired pressure. In order to increase the pressure within the gas reservoir 4, the pressure valve 19 located at the first 11 opening of the gas reservoir 4 is closed. This first pressure valve 19 located at the first opening 11 is a non-return valve which allows exhaled gas from the ventilation mask to enter the gas reservoir 4 but prevents air within the gas reservoir 4 from exiting the gas reservoir 4 and flowing back towards the ventilation mask when the gas reservoir 4 is under pressure. The first pressure valve 19 is opened, while a second valve 21 is closed, to allow the exhaled air to flow into the gas reservoir 4. The first valve 19 is then closed and the bladder system pressurises the gas reservoir 4 to the desired pressure. The second valve 21 is then opened and the pressurised exhaled air exits the gas reservoir 4 through the second opening 13 and into first gas mixer feed 10. The opening and closing of the valves can be controlled by a computer control system or simply by the balancing of air pressure either side of the non-return valves 19, 21. If the gas reservoir 4 becomes full, the excess gas is released via the pressure release valve 15.

Again, in some developments, the apparatus 100 may also include a moisture removal system located downstream of the ventilation mask 2 and upstream of the first pressure valve, configured to remove moisture from the exhaled air that enters the gas inlet 8.

Although the above described systems have been described with reference to a number of valves that can be opened and closed to pressurise and depressurise the gas within the gas reservoir 4, this is not essential. The systems generally include a number of non-return valves along each gas feed and at a general level, the systems are designed to ensure that the pressure of the gas leaving the gas reservoir and the air regulator pressure are equal as they both enter the gas mixing device. The pressure will continually fluctuate as the aircraft manoeuvres and the pressure breathing system is initiated by the aircraft oxygen system. That is, in general terms, the pressurisation and depressurisation of the gas reservoir 4 is controlled by the aircraft depending upon the G-Force exerted under the pilot. As high G is experienced, pressure breathing is initiated and so the pressure of the air leaving the gas reservoir is matched to the pressure of the regulator supplier air, thus allowing easy mixing within the gas mixing device.

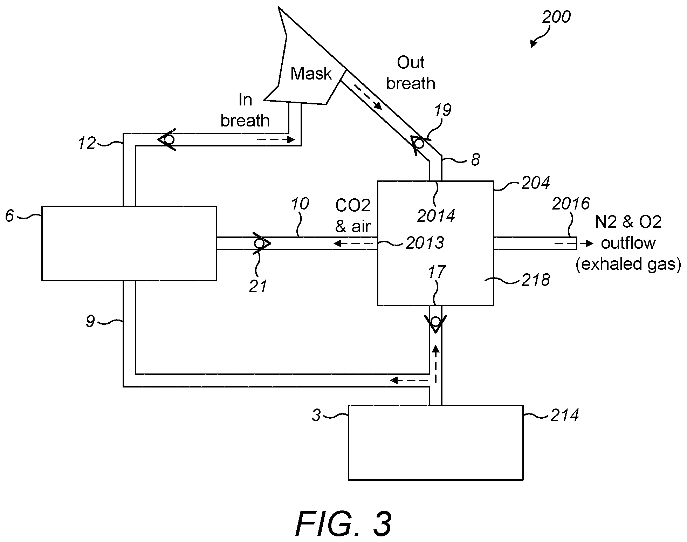

Another alternative apparatus 200 is shown in Figure 3. Here, the pressure adjuster 214 is provided in the form of the regulator 3, as with Figure 1. In this example, the gas reservoir 204 comprises a carbon dioxide filter 218 for capturing carbon dioxide from the user's exhaled air and re-circulating it back into the breathing air.

This apparatus 200 operates in a similar way that shown in Figure 1. Generally, the exhaled air is passed through the carbon dioxide filter 218 which uses V/PSA or TSA to capture and release carbon dioxide from the exhaled air. The unwanted oxygen and nitrogen present in the exhaled air is allowed to pass through the carbon dioxide filter 218 filter and into the cockpit.

As will be explained in more detail, the apparatus 200 comprises multiple carbon dioxide capture filters 218, one or more of these filters arranged in "capture mode", in which carbon dioxide from the exhaled air is captured, whilst there are one or more filters in "release mode", in which the stored carbon dioxide is released from the filters 218 and sent to the gas mixing device 6. In some cases, there are additional filters in an in-between state or "storing mode", in which is captured carbon dioxide is stored within the filter 218. The pressurised air from the regulator 3 is then used to release the carbon dioxide from the filter 218, pushing the carbon dioxide out of the filter and into the gas mixer device 6 via the first gas mixer feed 10. With this system there is no direct connection between the exhaled air and the mixer device 6, because the carbon dioxide filter valve system isolates the two from each other, by automated valve switching.

The carbon dioxide filter 218 described herein captures and re-uses the carbon dioxide from the mask wearer's own exhaled breath. In general, the captured carbon dioxide is recycled back into the breathing air at around 1%-10% to form the ventilation gas mixture. The amount of carbon dioxide which is recycled back into the breathing air depends on the altitude at which the ventilation gas is required to be used at, the partial pressure of oxygen and carbon dioxide, and system performance requirements (for example, manufacturing limits of the system components and physiological requirements of the human body e.g. how much carbon dioxide is needed and for what duration in order to first improve oxygen saturation and then maintain a satisfactory level).

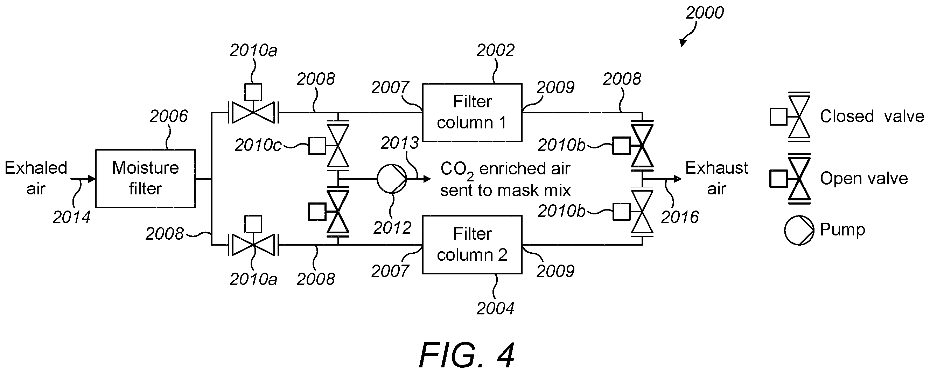

The carbon dioxide filter 218 captures carbon dioxide from the exhaled air using a sorbent material from which the carbon dioxide is then extracted and mixed with other gases in the gas mixing device 6 to form the ventilation gas mixture, which is then released back to the user via the ventilation mask 2 to be re-inhaled. The method by which carbon dioxide is captured and recycled makes use of molecular adsorption using either Temperature Swing Adsorption (TSA) or Vacuum/Pressure Swing Adsorption (V/PSA). Generally speaking, TSA is the act of heating and cooling a sorbent material in order to capture and release gas. The process of heating and cooling using an electric heater is referred to as Electric Swing Adsorption (ESA). Thus, any references to TSA include ESA, and via versa. These extraction techniques will be described in more detail below, with reference to Figures 4 and 5 which illustrate the general processes for PSA or TSA respectively.

Figure 4 shows an example PSA system 2000 which is in the form of a dual filter system comprising an air inlet 2014 via which exhaled air can enter the system 2000 from ventilation mask 2, an exhaust outlet 2016 via which air can be exhausted from the system 2000, and two gas reservoirs in the form of filters, namely a first filter 2002 and a second filter 2004, located between the air inlet 2014 and the exhaust outlet 2016. The system 2000 also includes a moisture filter 2006, located upstream of both the first and second filters 2002, 2004 and in fluid communication with both filters 2002, 2004. By upstream we mean that exhaled air entering the system 2000 flows through the moisture filter 2006 before it flows through either of the first or second filters 2002, 2004. The moisture filter is therefore positioned in a flow path between the air inlet and the filters 2002, 2004. The PSA system 2000 comprises a number of gas feeds 2008 which connect the various components of the system 2000 together so that air can flow between the components through the system 2000. The gas feeds 2008 therefore ensure that the individual components of the PSA system 2000 are in fluid communication with each other.

The system 2000 further comprises a number of valves 2010, positioned at various locations along the gas feeds 2008 (as will be described in more detail later) in order to control the flow of the exhaled air through the gas feeds 2008 and into, or out of, the various components such as the filters 2002, 2004.

A pump 2012 is also connected to the PSA system 2000 using a gas feed 2008 and is located downstream of the moisture filter 2006. The pump 2012 is in the form of a vacuum pump which acts to draw air out of the first and second filters 2002, 2004 by decreasing the pressure in the filters 2002, 2004 and so the pump 2012 is in fluid communication with the rest of the system components. In general, exhaled air is pushed into the system 2000 via the air inlet 2014 under the force of the user breathing out, passes through the system, in particular the filters 2002, 2004 via the gas feeds 2008, and either exits the system via an exhaust outlet 2016 or via a mixture port 2013.

Each filter 2002, 2004 has an input port 2007 and an output port 2009, which allow air to enter and leave the filter respectively. Air flow into and out of these ports is controlled by a set of valves which are able to switch between an open position (in which gas can flow through the valve) and a closed position (in which gas cannot flow through the valve). Each filter 2002, 2004 further comprises a housing and filter material, wherein the filter material is tightly sealed within the housing. Typically, the filter material resides within an internal cavity created by the housing. However, in some cases the filter material itself may form at least part of the housing structure. It is important that the housing can be tightly sealed so that a pressure decrease (i.e. a vacuum, or partial vacuum), can be achieved within the internal cavity inside the housing, where the filter material is located, by the pump 2012. Since the PSA system 2000 operates using pressure gradients, if the internal cavity inside the housing cannot be suitably sealed the system 2000 will not operate effectively or at all in some cases. In this context, sealed means that fluids, in particular gases, cannot flow into or out of the filter, except via the input 2007 and output 2009 ports when the valves 2010 are configured in the open position to allow fluid to flow through the filter. The housing is therefore hermetically sealed.

The housing can be made from any suitable material which can effectively be sealed and withstand the typical pressures experienced by the system.

The filter material within the housing is a sorbent material having a porous structure or sponge-like structure which behaves like a molecular sieve. This material structure allows molecules having a size which is greater than the size of the pores in the material to collect within the material (that is, into or out of the material), whilst allowing molecules having a size which is less than the size of the pores to pass through the material (that is, into or out of the material). The sorbent material therefore behaves like a partially selective filter. The material can be chosen to be selective towards a particular molecule of interest. Thus, in terms of filter material, any suitable selectively sorbent material for carbon dioxide can be used, such as, but not limited to, Zeolite 13X or a bespoke manufactured Metal Organic Framework (MOF) material.

Each of the first and second filters 2002, 2004 has a plurality of valves 2010, in particular three valves, associated with it. The first valve 2010a is positioned between the moisture filter 2006 and the filter 2002, 2004 i.e. upstream of the filter and the sorbent material. The first valve 2010a is therefore positioned in a flow path between the moisture filter 2006 and the filter 2002, 2004. This first valve 2010a controls the flow of gas into the sorbent material. The second valve 2010b is positioned between the filter 2002, 2004 and the exhaust outlet 2016 leading to the surroundings i.e. downstream of the filter and the sorbent material. The second valve 2010b is therefore positioned in a flow path between the filter 2002, 2004 and the exhaust outlet 2016. This second valve 2010b controls the flow of waste gas through the exhaust outlet 2016 and back into the surroundings. The third valve 2010c is positioned between the filter 2002, 2004 and the pump 2012. This third valve 2010c controls the flow of gas (which will generally be carbon dioxide, however in some cases small quantities of nitrogen and/or oxygen may also be present) extracted from the sorbent material into the mixing chamber 16 of the gas mixing device 6, where the ventilation gas mixture is produced.

These valves 2010 can be electrically or mechanically actuated, for example controlled by either a fixed mechanical or electrical timer. In some cases the valves 2010 can be controlled by a microprocessor based upon measured carbon dioxide levels from a sensor within the system 2000. In this case, when the measured carbon dioxide level within the sorbent material reaches an upper threshold level (for example corresponding to either a maximum amount of carbon dioxide that can be captured by the filter 2002 or any other quantity of carbon dioxide required), the first and second valves 2010a, 2010b are shut and the third valve 2010c is opened in order to allow the captured and stored carbon dioxide to be extracted using the pump 2012. When the measured carbon dioxide level within the sorbent material reaches a lower threshold level (for example corresponding to an empty filter 2002 containing none or very little carbon dioxide), or alternatively based on pre-determined timings, the third valve 2010c can be shut and the first valve 2010a re-opened in order to allow further carbon dioxide to be captured and stored by the sorbent material. Any gas that passes straight through the filter 2002 is exhausted to the surroundings, i.e. the cabin, via the second valve 2010b and the exhaust outlet 2016.

In order to capture carbon dioxide from the exhaled air using PSA, the exhaled air breathed out by a person is passed into the PSA system via the air inlet 2014. In some cases, a pump is used to generate the required positive pressure needed to push the exhaled air into the filter 2002 under pressure. The pump is located downstream of the ventilation mask 2 but upstream of the moisture filter 2006. The exhaled air therefore passes through the pump before it passes through the moisture filter 2006. Using pressurised exhaled air and a pump increases the adsorbent performance of the filter 2002 because the increased pressure provided by the pump helps to force the carbon dioxide molecules into the adsorbent filter material.

During operation of the PSA system 2000, the exhaled air enters the PSA system 2000 via the air inlet 2014 and is passed initially through the moisture filter 2006 (which can be in the form of a condenser, filter, or adsorbent system). In some examples, the system 2000 comprises an additional pump which pushes the exhaled air through the moisture filter 2006.

The moisture filter 2006 is required in order to remove excess moisture from the exhaled air before the air passes through the filter 2002 and the sorbent material. This is because the sorbent material, as well as capturing carbon dioxide, will also capture some water molecules and other gases present in the exhaled air. Whilst the sorbent material is selective, meaning that it has a preference for adsorbing some molecules over others (for example, carbon dioxide in this case), it will also adsorb other molecules that are not small enough to pass through the sorbent material (for example water in this case). If the majority of the water molecules are not removed before the air passes through the filter 2002, the filter 2002 is likely to capture large quantities of water molecules alongside the carbon dioxide, resulting in a lower quantity of carbon dioxide being captured and stored by the filter 2002. Thus, in order to improve the effectiveness of the filter 2002 in capturing carbon dioxide, water is initially removed from the air. In some cases, failure to remove moisture from the exhaled air would block the sorbent material and stop the filter working. It should be noted, however, that whilst the moisture filter is required for the particular sorbent material described herein, there may be some forms of sorbent filter material which do not require a moisture filter.

After the exhaled air has been passed through the moisture filter 2006, it then passes through the first valve 2010a and into the selective sorbent material contained within the first filter 2002. In some examples this is achieved under the action of a pump used to actively force i.e. push the air through the first filter 2002, as mentioned earlier.

The selective sorbent material stores relatively large quantities of the carbon dioxide from the exhaled air. As will be appreciated, the actual amount of carbon dioxide stored will depend on the choice of sorbent material. For example, sorbent material made of Zeolite 13X can adsorb 2.25 mmol/g carbon dioxide (i.e. 2.25 milli-moles of gas per gram of adsorbent). It should be noted that although mmol/g is the most common unit of measurement, this could also be represented as 0.099g carbon dioxide per gram of Zeolite.

As the exhaled air passes through the filter 2002, the sorbent material captures carbon dioxide from the exhaled air and retains it within the structure of the sorbent material. The remaining air, including any remaining carbon dioxide left in the air, that has not been captured by the sorbent material continues to pass through the filter 2002 and is then exhausted out of the exhaust outlet 2016 to the surroundings as waste gas, via the second valve 2010b which is a pressure release valve. Once the first filter 2002 has captured a maximal quantity of carbon dioxide, any air within the system 2000 or any new air entering the system 2000 continues to pass straight through the filter 2002 and out of the system 2000 via the exhaust outlet 2016. Generally, a maximal quantity of carbon dioxide means that the sorbent material is unable to adsorb any further carbon dioxide molecules. The filter 2002 may therefore be referred to as being full. The actual quantity of carbon dioxide gas, in terms of volume, that the filter 2002 can capture before it reaches a full state depends on the sorbent material chosen, as different materials can capture and store different quantities of gas, as well as on the temperature and the pressure at which the carbon dioxide is introduced into the filter 2002.

In some cases, a "full" filter corresponds to a filter having less than 100% carbon dioxide captured within the sorbent material. For example the filter 2002 may be determined to be full when the sorbent material comprises 80% carbon dioxide gas. This may occur when the required mixture of gases has been reached and no further carbon dioxide is required. For example, this may occur if a system is using pre-determined timings to control when and for how long each filter is either capturing carbon dioxide or releasing carbon dioxide. Alternatively, this point can be detected using a number of sensors which can detect the proportion of oxygen and carbon dioxide present in a particular gas sample by determining the partial pressures of oxygen and carbon dioxide. These sensors could be positioned within the filters themselves, or at the exhaust outlet 2016 from the whole system, or in a ventilation gas mask. Alternatively there may be no sensors at all, and the system may rely on pre-determined timings based upon the physical characteristics of the system, for example how long it typically takes a filter to reach a full state which can be determined using lab experiments or estimated. Since the amount of carbon dioxide required in the ventilation gas mixture is dependent on the altitude, the amount of carbon dioxide which corresponds to a full filter also varies with altitude.

In order to extract the stored carbon dioxide from the first filter 2002, the pump 2012, which is in the form of a vacuum pump, is used to create a partial vacuum within the filter 2002. The pump 2012 therefore sets up a pressure gradient so that the captured carbon dioxide is drawn from the relatively higher pressure environment inside the filter housing to the lower pressure gas feed via the third valve 2010c.

In some cases the valves could be in other combinations. For example, it could be possible to replace 2010b with a non-return valve under some design conditions. Also, it may be possible to have valves 2010a and 2010c in a combined two (or more) port valves with their opposite valves on the secondary reservoir.

In some examples, the carbon dioxide release process (in particular, the point in time at which the first filter 2002 starts to release the captured carbon dioxide) is determined by at least one sensor configured to measure the oxygen saturation levels of the air breathed by the user and send these measurements to a processor to process. This oxygen sensor is therefore located in a gas feed that is close to the user's mouth.

Once it has been determined, by the processors, that the oxygen saturation level has fallen below a minimum threshold level, the processor is configured to activate the pump 2012 and initiate the carbon dioxide release, or extraction, process. The minimum threshold level, and thus the amount of carbon dioxide required, depends on altitude. Thus, the processor determines whether the oxygen saturation level is acceptable for a particular altitude and, if not, triggers the extraction process accordingly. The extracted carbon dioxide as fed into the gas mixing device 6 via a gas feed 2008, a gas inlet 2001, and the first gas mixer feed 10. Here, the extracted carbon dioxide is then mixed with other gases (namely oxygen, nitrogen, and normal breathing air, either individually or in combination) which have been supplied to and entered the gas mixing device 6 to generate the correct air mixture for ventilation. The ventilation gas mixture is then fed from the gas mixing device 6 into the ventilation mask 2 via the outlet 12. The user then breaths in the carbon dioxide enhanced air via the ventilation mask 2.

Whilst this disclosure has described the use of sensors to determine and control the point in time at which the function of each filter is switched between capturing and releasing, it would also be possible to design and configure a system which uses at least one timer to control the function of the filters. The timer would control the operation of the valves 2010 so that the air flow is directed through the system 2002 and alternately between the two filters 2002, 2004, depending on which combination of valves are open and closed.

Thus, this description is intended to cover systems in which the function of the filters is controlled using a timer, by sensors (which may be in the filter, in the supply/exhaust or output lines, or in a mask, or a microprocessor (or similar logic circuit) which may be employed to control the operation of the system based upon timings, and/or measured oxygen and/or carbon dioxide either within or exiting the filter system.

Figure 5 shows an example TSA system 3000 which is in the form of a dual filter system comprising an air inlet 3014 via which exhaled air can enter the system 3000, an exhaust outlet 3016 via which air can be exhausted from the system 3000, and two TSA gas reservoirs in the form of filters, namely a first TSA filter 3002 and a second TSA filter 3004 located between the air inlet 3014 and the exhaust outlet 3016. The TSA system also includes a TSA moisture filter 3006, located upstream of both the first and second TSA filters 3002, 3004 and in fluid communication with both TSA filters 3002, 3004. The moisture filter 3006 is therefore positioned in a flow path between the air inlet 3014 and the filters 3002, 3004. The TSA system 3000 further comprises a number of gas feeds 3010 which connect the various components of the TSA system 3000 together so that air can flow between the components through the TSA system 3000. The gas feeds 3010 therefore ensure that the individual components of the TSA system 3000 are in fluid communication with each other.

In general, the exhaled air is pushed into the system 3000 from the ventilation gas mask 2 via the air inlet 3014, passes through the filters 3002, 3004 in the system 3000, and either exits the system via the exhaust outlet 3016 or via a mixture port 3013.

As with the PSA system 2000, each TSA filter 3002, 3004 has an input port 3007 and an output port 3009, which allow air to enter and leave the filter respectively. Air flow into and out of these ports is controlled by a set of valves 3010 which are able to switch between an open position (in which gas can flow through the valve) and a closed position (in which gas cannot flow through the valve). Each filter 3002, 3004 further comprises a housing and filter material, the filter material being substantially sealed within the housing. Typically, the filer material resides within an internal cavity created by the housing but in some examples the filter material itself may form at least part of the housing structure. Again, it is important that the housing is sealed so that the internal cavity inside the housing, where the filter material is typically located, can either be heated or cooled, whereby obtaining and maintaining a specific low temperature range allows gas adsorption, and obtaining and maintaining a specific high range allows gas de-adsorption. The TSA system 3000 works based on the adsorbent and adsorbent characteristics of the sorbent material, and so if the temperature of the internal cavity and sorbent material contained inside the housing cannot be suitably controlled, the system 3000 will not operate effectively or at all in some cases. In some developments in order to help control and maintain the desired temperature of the filter, mechanisms such as sealing, insulating, or heat shielding from other components of the TSA system can be incorporated.

The housing can be made from any suitable material which can effectively be sealed to maintain and withstand the typical temperatures experienced by the TSA system 3000.

TSA works in a very similar way to PSA, but instead of using a pressure gradient to capture and release the carbon dioxide from the exhaled air, a temperature gradient is used. As before, the filter material within the housing is a sorbent material, chosen to be selectively sorbent for carbon dioxide. Any type of suitable selectively sorbent material may be used, such as, but not limited to, Zeolite 13X or a bespoke manufacture Metal Organic Framework (MOF) material. For both TSA and PSA the same sorbent material can be used. However, different sorbent materials could also be used, i.e. a first material for TSA and a different second material for PSA.

Generally, in order to capture carbon dioxide from the exhaled air using TSA, the exhaled air, which will be under at least some pressure as a result of the user breathing out, is passed into the TSA system 3000 via the air inlet 3014 through the action of a pump. The pump is used to generate the positive pressure needed to push the exhaled air into the filter 3002. However, in some examples this pump is not present. The pump is located downstream of the ventilation mask 2 but upstream of the moisture filter 3006 and so the exhaled air passes through the pump before it passes through the moisture filter 3006. This configuration increases the adsorbent performance of the filter 3002 because the increased pressure helps to force the carbon dioxide molecules into the adsorbent filter material. A restrictor valve may be located within the exhaust outlet 3016 so that the pump can sufficiently increase the pressure within the system 3000 in order to force the air through.

The exhaled air is then passed through the sorbent material which is contained within the filter 3002. The TSA filter 3002 is cooled to capture carbon dioxide and then subsequently heated to release the carbon dioxide.

During operation of the TSA system 3000, the exhaled air enters the TSA system 3000 via the air inlet 3014 and is first passed through the moisture filter 3006 (which may be a condenser, filter, adsorbent system, or any other suitable method for removing moisture), in order to remove excess moisture from the exhaled air, as explained previously in the context of the PSA system 2000. A pump may be used to force the exhaled air through the moisture filter 3006, as outlined above.

After the exhaled air has passed through the moisture filter 3006, it then passes into the selective sorbent material inside the first TSA filter 3002. This is again in general achieved under the action a pump to actively push exhaled air through the first filter 3002, as already mentioned. However, in some cases, the action of the user breathing, which will generate a small pressure, will be enough to push the exhaled air through the first filter 3002. Unlike PSA, the sorbent material used for TSA is cooled using a temperature control means 3012, which in this example is in the form of a Peltier. The Peltier is able to perform both heating and cooling functions and so can be used as a temperature controller.

In the example shown in Figure 5, the temperature control means 3012 is located next to (either directly next to or slightly spaced apart from) the first filter 3002 so that it can adjust and control the temperature of the sorbent material within the filter 3002. In other examples, not shown, the temperature control means may comprise part of the filter, rather than form a separate component, for example Zeolite 13X powder 3D printed directly onto a heater matrix within the filter 3002.

The temperature control means 3012 adjusts the temperature of the filter housing which in turn adjusts the temperature of the internal cavity within the housing. This has the effect of adjusting the temperature of the sorbent material. In the example shown in Figure 5, the temperature control means 3012 reduces the temperature of the sorbent material so that it is suitable for the sorbent material to adsorb the selective gas. The temperature control means 3012 is therefore used to place the sorbent material in a cooled state. Typically, a cooled state corresponds to an absolute temperature of 30 degrees or less, which is sufficient for the sorbent material to adsorb carbon dioxide. However, this temperature changes depending upon the specific sorbent material used and may be higher than 30 degrees. In some configurations, the temperature control means 3012 is connected to a computer system which controls the temperature to which the sorbent material should be cooled or heated to. In other configurations a computer system is not required and it would also be possible to cool the sorbent material in an "open loop" uncontrolled manner. In terms of heating, the TSA system might comprise a simple analogue circuit that is configured to measure the temperature of the filter 3002 and turn a heating element on/off. This could also be achieved by a computer or microprocessor.

In the cooled state, this selective sorbent material captures and stores relatively large quantities of the carbon dioxide. As discussed with reference to PSA, the actual amount of carbon dioxide stored will depend on the choice of sorbent material used. For example, Zeolite 13X can adsorb 2.25 mmol/g carbon dioxide.

As the exhaled air passes through the TSA filter 3002, the sorbent material captures carbon dioxide from the exhaled air and retains it within the structure of the sorbent material. The remaining air, including any remaining carbon dioxide left in the air that has not been captured by the sorbent material or any new air that enters the system 3000, continues to pass through the filter 3002 and is then exhausted to the ambient air in the surroundings as waste gas via the exhaust outlet 3016.

Once the first TSA filter 3002 has captured a maximal quantity of carbon dioxide, and so can be considered full, any air within the TSA system 3000 continues to pass straight through the TSA filter 3002 and out of the TSA system 3000 via the exhaust outlet 3016. As mentioned in relation to the PSA system 2000, the actual quantity of carbon dioxide gas which corresponds to a maximal quantity depends on the sorbent material chosen.

In some configurations and situations, the TSA filter 3002 may enters a resting state in which it is storing the captured gas rather than capturing or releasing. The TSA filter 3002 remains in this state until the captured gas is required to be released from the TSA filter 3002. Whilst in the resting state, the TSA filter 3002 does not need to be actively cooled by the temperature control means 3012. The temperature control means 3012 can therefore be switched off, by the computer system, and the TSA filter 3002 can be left at ambient temperature i.e. cabin temperature. Since the sorbent material within the TSA filter 3002 has already been cooled inside the TSA filter 3002, the TSA filter 3002 will continue to store the captured carbon dioxide without any additional cooling being required. This resting state may also apply to the PSA system.

In order to release, or extract, the carbon dioxide which is stored in the sorbent material, the sorbent material is heated using the temperature control means 3012. The temperature control means 3012 increases the temperature of the sorbent material so that it will be at temperature that is suitable to release the stored gas. This temperature is based upon the physical properties of the adsorbent material, characterised by its adsorption isotherm characteristics. The temperature control means 3012 is therefore used to place the sorbent material in a heated state. Typically, a heated state corresponds to an absolute temperature of 60 degrees or more, which is sufficient for the sorbent material to release carbon dioxide.

In some examples, the time at which the captured carbon dioxide gas is extracted from the first TSA filter 3002 is determined by at least one sensor configured to measure the oxygen saturation levels of the air breathed by the user and send these measurements to a processor for processing. Once is has been determined, by the processors, that the oxygen saturation level has fallen below a minimum threshold level, the processor is configured to activate the temperature control means 3012 to heat the TSA filter 3002 and initiate the carbon dioxide extraction process.

However, as with PSA, the release of carbon dioxide may not need to be sensed. Instead it may be determined based on a fixed timing, or measurement of carbon dioxide, or additionally for TSA systems, it may be the temperature of a filter bed which is measured (or a combination of multiple sensors). Thus, this description covers systems controlled using a timer, by sensors (which may be in the filter, in the supply/exhaust or output lines, or in a mask, or a microprocessor (or similar logic circuit) which may be employed to control the operation of the system based upon timings, and/or measured oxygen either within or exiting the filter system.

The extracted carbon dioxide is fed into the gas mixing device 6 via a gas feed 2010, gas inlet 2001, and first gas mixer feed 10 where it is then mixed with other gases (namely oxygen, nitrogen, and normal breathing air, either individually or in combination) which have been supplied to the gas mixing device 6 via a number of other gas inlets in order to generate the correct air mixture for ventilation. The ventilation gas mixture is then fed from the gas mixing device 6 into the ventilation mask 2 via another gas feed 3010, gas mixture outlet 2003, and outlet 12. The user then breaths in the carbon dioxide enhanced air via the ventilation mask 2.

The temperature to which the sorbent material is heated and cooled varies depending on the particular choice of sorbent material and its associated material characteristics. This means that the specific temperature associated with the cooled state of the sorbent material is particular to each sorbent material. Generally, an operating temperature range of 25 degrees to 65 degrees is used, the lower end of the range corresponding to the cooled state used for capturing carbon dioxide and the higher end of the range corresponding to the heated state used to releasing carbon dioxide. However, as will be appreciated, other temperature ranges may also be used, depending on the sorbent material chosen and the ambient pressure.

The above description describes heating and cooling using a temperature control means in the form of a Peltier. However, a number of different temperature control means can be used instead to achieve the same heating and cooling functions including, but not limited to refrigerants, thin film heaters, and electrical coils. Furthermore, multiple combinations of heating and cooling can be used simultaneously. In some cases, the temperature control means comprises a separate heater and cooler, rather than a temperature control means which can perform both functions. In other cases, the temperature control means comprises a heating means and cooling can be achieved using the action of the exhaled breath passing through the system (which will generally be at a temperature that is lower than the heated filter), or ambient cooling to bring the temperature of the filter down sufficiently in order to allow adsorption when the heater is switched off.

It should be noted that the present disclosure relates to the concept of using PSA or TSA for capturing carbon dioxide for respiratory re-use, irrespective of the precise TSA or PSA process configuration or specific sorbent material. The PSA and TSA processes for recycling carbon dioxide have been described using a dual, or two, filter system, as shown in Figures 4 and 5, in which one filter, for example the first filter 2002, 3002, is adsorbing the carbon dioxide, whilst the other filter, for example the second filter 2004, 3004, is releasing carbon dioxide. However, as will be appreciated, a PSA or TSA filter system having any number of filters may be used instead, such as a single filter system or a multi-filter system comprising more than two filters.

In a single filter system, the single filter will first be used to capture and store the carbon dioxide. Once the single filter has adsorbed its maximal quantity of carbon dioxide, the single filter will then be used to release the captured and stored carbon dioxide. A computer control system, in conjunction with a number of sensors configured to measure the oxygen saturation levels of the air breathed by the user, can be used to switch between a capturing function (in which the gas of interest, here carbon dioxide, in captured and stored in the sorbent material) and a releasing or supplying function (in which the stored gas of interest, here carbon dioxide, is supplied to the gas mixing device), based on the oxygen saturation levels which can be used to indicate demand for ventilation air. In some cases, timers can also be used to switch functions. When timers are used, the filter is switched between capturing and releasing carbon dioxide after a pre-determined period of time rather than based on the oxygen saturation levels of the air breathed by the user.

In multi-filter systems, the additional filters can be connected in series or parallel and the additional filters can be rested or cooled as part of the cycle. When the filters are connected in series, each filter is filled (or emptied) individually one after another with subsequent filters being filled (or emptied) once the previous filter has reached its maximum capacity for carbon dioxide capture (or has been completely depleted of captured carbon dioxide). When the filters are connected in parallel, the system may be arranged such that all the connected filters are filled or emptied simultaneously, rather than one after another. In some multi-filter system, when additional filters are not actively adsorbing or releasing carbon dioxide they may be resting or cooling (cooling only happening in the case of using TSA). By resting, we mean that the filter is in an idle state rather than capturing or releasing carbon dioxide. That is to say, the filter is performing a storage function for the captured carbon dioxide. By cooling, we mean that empty filters in a TSA system that have already had their carbon dioxide extracted from them are cooled, after they have been heated to release to carbon dioxide, in order to prepare these filters for subsequent capture of carbon dioxide. In this case, the filters are actively cooled using the temperature control means 3012 in the TSA system 3000. However in some TSA systems the cooling may be passive, meaning that the filter is gradually allowed to decrease in temperature from its heated state and the temperature control means is not used to cool the filter down. The functions of each filter in a multiple filter system can be controlled based upon electrical or mechanical timers, or an electrical or computer-based control system.

Using multiple filters and an associated system of valves allows for more than one filter to capture carbon dioxide from the exhaled air, whilst the other filter or filters release their captured carbon dioxide to be used for gas mixture production. In multiple filter systems, such as the dual filter systems 2000, 3000 described above, the system cycles between using, for example, a first filter 2002, 3002 and a second filter 2004, 3004 (and any other filters that are present in the system as necessary) by closing and opening the first valves 2010a associated with each filter.

For example, in the two filter system described above, one filter (e.g. the first filter) may act as a storage filter for capturing carbon dioxide while the other filter (e.g. the second fitter) may act as a releasing filter for releasing captured carbon dioxide. Once the storage filter is full or the releasing filter is empty (or based upon pre-set timing, the timing function set and controlled by a computer system or simple electronics), the system of valves is used to switch the storage filter into the releasing filter and vice versa. An advantage of this multiple filter system is that there is a continuous supply of carbon dioxide available for producing the ventilation gas mixture. There is no pause or downtime while the storage filter is filling up before it can release the carbon dioxide. This allows carbon dioxide to be readily available on demand. A non-continuous, intermittent supply of carbon dioxide is also acceptable, and in some cases may be preferable over continuous supply.

Although the PSA carbon dioxide capturing system 2000 and TSA carbon dioxide capturing system 3000 have been described separately, in some examples the carbon dioxide capturing system will use both PSA and TSA. This combination system will include the components from each individual PSA system and TSA system that have been described above. Thus a combination system will include the vacuum pump and valves from the PSA system as well as the temperature control means from the TSA system. Using a combination of both PSA and TSA to capture carbon dioxide from exhaled air results in a combination system that is more efficient than using either PSA or TSA alone.

Thus, as will be appreciated, this disclosure also covers differing permutations of valves, pumps, and heaters in order to achieve these configurations as well as combinations of PSA and TSA within the same system and a PSA system where a vacuum is used instead of positive pressure (or a combination of high pressure and vacuum in different parts of the cycle).

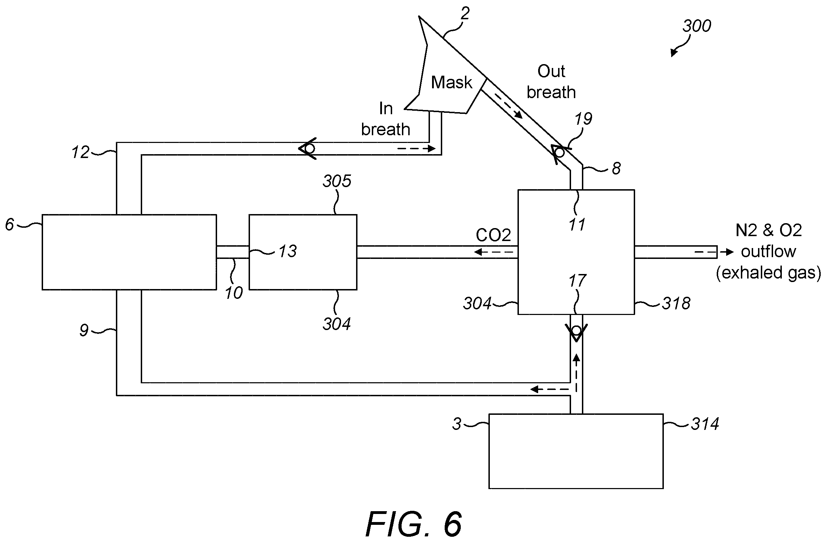

Figure 6 shows another alternative apparatus 300, similar to that shown in Figure 3. In this example, the pressure adjuster 314 is again in the form of the regulator 3. However, the gas reservoir 304 comprises a carbon dioxide filter 318, for capturing carbon dioxide from the user's exhaled air and re-circulating it back into the breathing air, and a storage bag 305, for storing carbon dioxide gas that has been released from the carbon dioxide filter 318 and before it is sent to the gas mixing device 6 via the first gas mixer feed 10.

This system operates in substantially the same way as that shown in Figure 3 and so will not be described again. This only difference between this system and that of Figure 3 is that the carbon dioxide from the exhaled air is temporarily stored in the storage bag 305 until it is required by the gas mixing device 6 to make the ventilation gas mixture.

As mentioned earlier, in cases where the air supplied from the regulator comprises more than one gas, for example a mixture of at least oxygen and nitrogen, some of the nitrogen may be removed from this air before it enters the gas mixing device. The processes by which this may achieved will now be explained.

Nitrogen can be removed from the regulator air mixture using a nitrogen filter system, to form nitrogen reduced air, in order to increase the amount of oxygen present in the regulator gas mixture. The process is similar in concept to the process used to capture carbon dioxide from the exhaled air, which has been described earlier. Nitrogen can therefore be removed from the regulator air, the process being referred to as nitrogen filtration, using either TSA or PSA as described above. Thus, in the case of nitrogen removal, the air entering the filtration system is pressurised regulator air rather than exhaled air from a user, and the captured and removed nitrogen is disposed of rather than recycled and reused elsewhere in the system.

The general process for nitrogen filtration, using PSA and TSA, will now be described, with reference to Figures 10 and 11 respectively. As with the carbon dioxide capture and recycling system, the following disclosure covers different configurations of filter columns, pumps, valves and heaters that could be used in a TSA or PSA system (or combined TSA and PSA system).

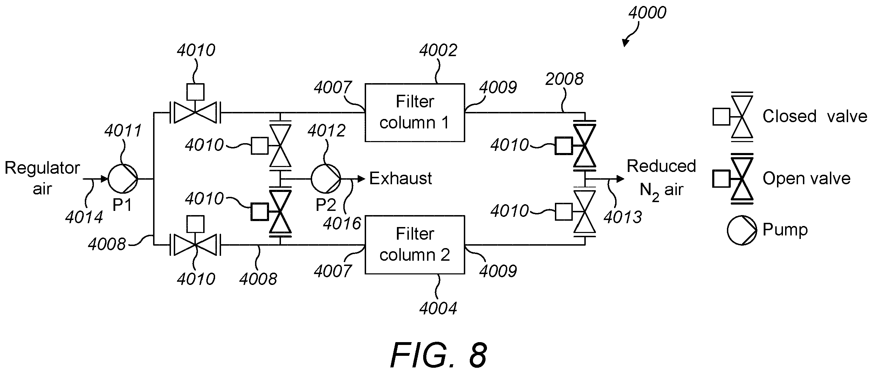

Starting with Figure 8, an example filtration system configured to carry out the process of nitrogen removal using PSA will be described. For the process of nitrogen removal, the air entering the PSA system is pressurised air from the regulator.

The filter material used for nitrogen filtration is generally the same type of filter material that is used for carbon dioxide capture, being selective towards nitrogen this time rather than carbon dioxide, and so will not be described again.

The example nitrogen filtration system 4000 shown in Figure 8 takes the form of a dual filter system comprising an air inlet 4014 via which air can enter the system 4000, an exhaust outlet 4016 via which air can be exhausted from the system 4000, and two gas reservoirs in the form of first and second filters 4002, 4004 located between the air inlet 4014 and the exhaust outlet 4016, each filter comprising the selectively sorbent filter material. This dual filter system is generally the same and operates in the same way as that described in relation to carbon dioxide capture, and so will not be described again. In the nitrogen filtration system, the moisture filter is optional and is used for removing water molecules from the air, as discussed previously.

In order to remove the nitrogen from the regulator air mixture, which is generally a mix of nitrogen and oxygen, the air mixture is passed through the sorbent material contained within the first filter 4002 under pressure. This can be achieved using two different mechanisms.

According to the first mechanism, the air mixture can be drawn through the sorbent filter material using a pump 4011 located upstream of the sorbent material. The pump 4011 forces the air, under pressure, firstly through a valve 4010 and subsequently through the sorbent material in the first filter 4002. The sorbent material captures some of the nitrogen from the air as it passes through the fitter 4002. The air which is passed through the filter 4002, as a result of the pressure applied to the system 4000 by the pump 4012, contains a reduced amount of nitrogen gas which is then fed through another valve 4010 into the gas mixing device 6. The exhausted air containing reduced nitrogen is then ready to be mixed with carbon dioxide and air as necessary to produce the ventilation gas. Thus, in general, the nitrogen-reduced air (which may also be referred to as oxygen enriched air) is mixed with the carbon dioxide, and typically also oxygen and nitrogen, exhaled by the user. Thus, the oxygen enriched air is in general mixed with either: i) oxygen and carbon dioxide; ii) oxygen, carbon dioxide, and nitrogen; or iii) carbon dioxide. A restrictor valve is fitted on the exhaust outlet 4016 to further increase the pressure in the filter PSA system 4000, in order to increase the filter performance.

The second mechanism uses a different pump mechanism, relying on pulling air through the filter system 4000 rather than pushing air through the filter system 4000. Thus, in this case, instead of having a pump located upstream of the sorbent material, the pump 4015 is located downstream of the sorbent material. This pump 4015 draws the air through down a pressure gradient, firstly through a first valve 4010 and subsequently through the sorbent material in the first filter 4002. The sorbent material captures some of the nitrogen as the air passes through the filter 4002 so that the air that passes through the filter comprises a reduced amount of nitrogen compared to the incoming air. Again, this air is then drawn through a second valve 4010 and into the gas mixing device 6 where is can be used to produce the ventilation gas mixture.

The process of capturing and releasing nitrogen by the sorbent material within the filter 4002 is the same as that used in relation to the carbon dioxide PSA system and so will not be described again.

The air that has passed through the filter 4002 (i.e. nitrogen reduced air) is then exhausted out of the system 4000 and fed into the gas mixing device 6 via a gas feed 4008 and into the second gas mixer feed 9. As before, the nitrogen reduced air is then mixed with other gases (such as oxygen, carbon dioxide enhanced air, and normal breathing air, either individually or in combination) which have been supplied to and entered the gas mixing device 6 via a number of other gas inlets to generate the correct air mixture for ventilation. The ventilation gas mixture is then fed from the gas mixing device 6 into the ventilation mask 2 via the outlet 12.

The nitrogen extracted from the filter 4002 using the vacuum pump 4012 is released to the surroundings as waste gas, via a pressure release valve and the exhaust outlet 2016.

As seen in Figure 8, there are two filters 4002, 4004. In this dual filter system, one filter 4002 is cleaned using a vacuum pump 4011, operatively connected to both the first and second filters 4002, 4004, to remove any remaining gas captured in the sorbent material, while the other filter 4004 is used to adsorb nitrogen from the air and exhaust nitrogen reduced air to the gas mixing device 6. The system 4000 alternates the cleaning and filtering functions between the two filters 4002, 4004. Thus, once one of the filters has been cleaned it will switch functions to filtering and removing nitrogen from the air. At the same time, the filter which was performing the nitrogen removal will then switch to being cleaned. The system 4000 cycles between the two filters by closing and opening a series of valves in the system, in a similar manner to that described previously with reference to Figure 4.

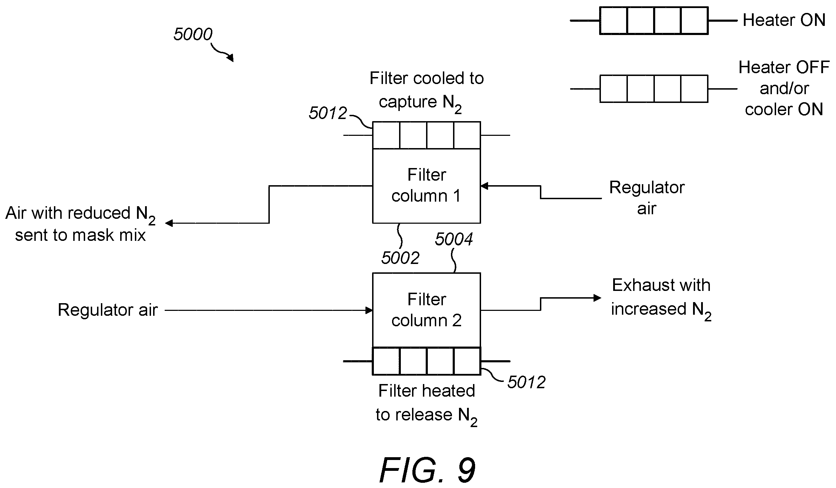

Now, with reference to Figure 9, an example process of nitrogen removal using TSA will be described.

The mechanism by which the regulator air is passed through the filter system using TSA is generally the same as the mechanism for passing air through the filtration system using PSA. Thus, the first and second mechanisms for moving air through the filter systems apply to the TSA system and will not be described again.

Again, Figure 9 shows an example system in the form of a dual filter system 5000, which has the same configuration as the previously described TSA filter system 3000, and carbon dioxide capture systems, and operates in the same way, and so these details will not be described again.

In the dual filter system shown in Figure 9, one filter 5002 is cleaned using a temperature control means 5012 to heat the filter to remove the nitrogen enhanced air from the filter to be exhausted to the surroundings, while the other filter 5004 is used to adsorb nitrogen from the air as it passes through this other filter 5004, this other filter being in a cooled state as described previously in relation to carbon dioxide capture, and exhaust the nitrogen reduced air to the gas mixing device 6. The specific temperature associated with the cooled state is particular to the characteristics of each sorbent material and is therefore different depended upon the selected material.

The air which is passed through the capturing filter and exhausted via the exhaust outlet contains a reduced quantity of nitrogen, compared to the air mixture that entered the system, and hence an increased quantity of oxygen, which is then mixed with other gases to generate the correct gas mix to be delivered to the ventilation mask 2. Once the capturing filter is full or the releasing filter is empty (or based upon either pre-set timing or measured gas properties), a system of valves is used to switch the storage filter into the releasing filter and vice versa, as has been described previously. Again, more than two filters can be used in this configuration where addition filters may be used in series or parallel, or where filters are rested or cooled as part of the cycle. The control can be based upon electrical or mechanical timers, or an electrical or computer-based control system.

As before, the system 5000 alternates the cleaning and filtering functions between the two filters. As described earlier, the system cycles between the two filters by closing and opening a series of valves in the system.

As discussed in relation to TSA systems for carbon dioxide capture, heating and cooling of the filters may be achieved by a number of different methods, including, but not limited to refrigerants, Peltiers, electrical coils, and natural cooling or air-cooling. Furthermore, multiple combinations of heating and cooling can be used simultaneously.

Again, in some examples the nitrogen filtration system will use both PSA and TSA and so will include the components from each individual PSA system and TSA system that have been described above.

Overall control of either the PSA or TSA system for carbon dioxide capture or nitrogen removal can be achieved using a mechanical timed system which includes at least one timer configured to control the operation of the valves in the system between open and closed states, which in turn controls the function of the filter between capturing and releasing functions. Alternatively, control may be achieved by a computer control system.

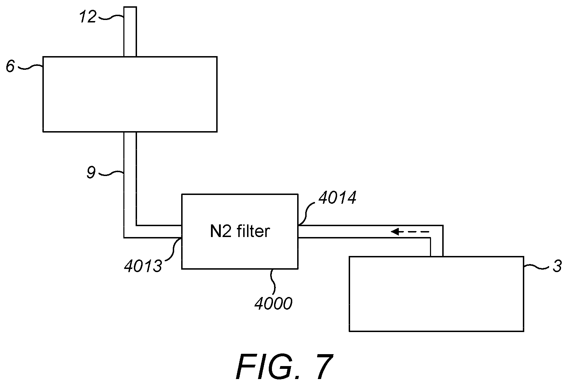

It should be noted that the nitrogen filter described with reference to Figure 7 may be combined with any of the previously described apparatuses. Thus, for all of the systems described herein, the small increase in oxygen can be generated by placing a nitrogen filter (using either a PSA or TSA system) between the regulator and the gas mixing device, as shown in Figure 7.

The overall apparatus, including the filter systems and bladder system, can either be electrically or computer controlled, or controlled using a simple mechanical system such as a barometric capsule connected to a valve. Oxygen and carbon dioxide sensors can be used within the control system, as well as pressure and temperature sensors, but equally, the control may be based upon pre-defined parameters, established during development.

The apparatus and systems described herein typically start when an aircraft takes off and stop when an aircraft lands. In some cases, the systems and apparatus start/stop when the aircraft crew switch on/off the oxygen system when the crew member enters or exits the cockpit. Nevertheless, there may be some safety and operational benefits in providing system status information to the pilot (or other crew members in a multi crew combat aircraft), or directly to the aircraft Flight Control System (FCS), in order allow the carbon dioxide status to inform piloting decisions. The following non-exhaustive list provides a number of options for providing system status information to the crew at any phase of flight. Firstly, there may be provided a simple status light on the device or aircraft instruments or a vibration mechanism provided in the ventilation mask to indicate a change in system status. There may also be a connection to the aircraft Central Warning System to provide audio and/or visual attention getting alerts in the event of system failure. A connection to the aircraft FCS could also be provided in order to change the aircraft self-protection limitations depending upon the system status (e.g. reducing the maximum achievable G or G-onset when the system is not functioning in accordance with pre-defined parameters). In other examples, there may be a connection to the aircraft Ground Proximity Warning System (GPWS) or Traffic Collision Advisory System (TCAS) in order to change the parameters for safe hazard avoidance, depending upon whether the system is functional. For example, commanding an earlier "PULL UP" command if the carbon dioxide system is inoperative, to allow hazard avoidance with a reduced peak G-force. Finally, there may be real-time monitoring of the air mix inhaled and exhaled by the crew, with warnings for hypoxia, hypercapnia and hypocapnia.

## Claims

1. An apparatus for preparing a ventilation gas mixture for pilots and crew of aircraft, the apparatus comprising:
a first gas mixer feed (10) configured to receive exhaled air from a person, wherein the exhaled air comprises carbon dioxide;
a second gas mixer feed (9) configured to receive an air mixture comprising at least one gas;
a gas mixing device (6) configured to receive the exhaled air comprising carbon dioxide and the air mixture from the first and second gas mixer feeds and combine the exhaled air comprising carbon dioxide with the air mixture in the gas mixing device to form a ventilation gas mixture comprising carbon dioxide; and
a pressure adjuster (14) configured to increase the pressure of the exhaled air comprising carbon dioxide in the first gas mixer feed so that it substantially matches the pressure of the air mixture in the second gas mixer feed.

2. The apparatus according to claim 1 wherein the pressure adjuster comprises a regulator (3).

3. The apparatus according to claim 2 wherein the regulator is configured to supply at least one gas at under pressure to the second gas mixer feed.

4. The apparatus according to any preceding claim wherein the first gas mixer feed comprises a gas reservoir (4) configured to receive the exhaled air from a person and store the exhaled air within the gas reservoir before the exhaled air is received by the gas mixing device, and preferably wherein the pressure adjuster is configured to adjust the pressure of the exhaled air stored within the gas reservoir.

5. The apparatus according to claim 4 when directly depending from claim 2, wherein the regulator is configured to adjust the pressure of the exhaled air stored within the gas reservoir by supplying at least one gas at high pressure to the gas reservoir via a gas reservoir inlet.

6. The apparatus according to any preceding claim wherein the pressure adjuster further comprises an external gas reservoir (170) in fluid communication with the regulator, preferably the external gas reservoir is positioned adjacent to the external surface of the gas reservoir.

7. The apparatus according to claim 6 wherein the external reservoir is configured to substantially surround the external surface of the gas reservoir.

8. The apparatus according to claim 6 or claim 7 when depending on claim 2, wherein the regulator is configured to supply at least one gas at high pressure to the external gas reservoir such that the pressure of the gas stored within the gas reservoir is increased.

9. The apparatus according to any of claims 4 to 5 wherein the gas reservoir comprises a filter system (218) configured to store carbon dioxide from the exhaled air and further configured to release the stored carbon dioxide to the first gas mixer feed.

10. The apparatus according to claim 9 wherein the filter system comprises a first filter (2002) configured to store carbon dioxide from the exhaled air and a second filter (2004) configured to release stored carbon dioxide to the first gas mixer feed.

11. The apparatus according to claim 10 when depending on claim 2, wherein the regulator is configured to supply at least one gas at high pressure to the second filter such that the pressure of the released carbon dioxide entering the first gas mixer feed is increased.

12. The apparatus according to any of claims 10 to 11 wherein the gas reservoir comprises an intermediate gas storage device configured to receive the stored carbon dioxide from the filter system and temporarily store the carbon dioxide, and further configured to release the stored carbon dioxide to the first gas mixer feed.

13. The apparatus according to any preceding claim wherein the second gas mixer feed comprises a nitrogen filter (4000) configured to store nitrogen from air received from the second gas mixer feed and further configured to exhaust nitrogen reduced air from an outlet in the nitrogen filter and supply the nitrogen reduced air to the gas mixing device via the second gas mixer feed.

14. An aircraft comprising the apparatus according to any of claims 1 to 13.

15. A method of preparing a ventilation gas mixture for us in an aircraft comprising the steps of:
receiving, by a first gas mixer feed, exhaled air from a person, wherein the exhaled air comprises carbon dioxide;
receiving, by a second gas mixer feed, an air mixture comprising at least one gas;
increasing, by a pressure adjuster, the pressure of the exhaled air comprising carbon dioxide in the first gas mixer feed so that it substantially matches the pressure of the air mixture in the second gas mixer feed
receiving, by a gas mixing device, the exhaled air comprising carbon dioxide and the air mixture from the first and second gas mixer feeds;
combining, by the gas mixing device, the exhaled air comprising carbon dioxide with the air mixture to form a ventilation gas mixture.

## Patentansprüche

1. Vorrichtung zum Herstellen eines Belüftungsgasgemisches für Piloten und Besatzung von Flugzeugen, die Vorrichtung umfassend:
eine erste Gasmischerzufuhr (10), die dazu konfiguriert ist, ausgeatmete Luft von einer Person aufzunehmen, wobei die ausgeatmete Luft Kohlendioxid umfasst;
eine zweite Gasmischerzufuhr (9), die dazu konfiguriert ist, ein Luftgemisch, das mindestens ein Gas umfasst, aufzunehmen;
eine Gasmischeinrichtung (6), die dazu konfiguriert ist, die ausgeatmete Luft, die Kohlendioxid umfasst, und das Luftgemisch von der ersten und der zweiten Gasmischzufuhr aufzunehmen und die ausgeatmete Luft, die Kohlendioxid umfasst, mit dem Luftgemisch in der Gasmischeinrichtung zu kombinieren, um ein Belüftungsgasgemisch zu bilden, das Kohlendioxid umfasst; und
eine Druckeinstellvorrichtung (14), die dazu konfiguriert ist, den Druck der ausgeatmeten Luft, die Kohlendioxid umfasst, in der ersten Gasmischerzufuhr zu erhöhen, sodass er im Wesentlichen mit dem Druck des Luftgemischs in der zweiten Gasmischerzufuhr übereinstimmt.

2. Vorrichtung nach Anspruch 1, wobei die Druckeinstellvorrichtung einen Regler (3) umfasst.

3. Vorrichtung nach Anspruch 2, wobei der Regler dazu konfiguriert ist, mindestens ein Gas unter Druck an die zweite Gasmischerzufuhr zu liefern.

4. Vorrichtung nach einem vorstehenden Anspruch, wobei die erste Gasmischerzufuhr einen Gasbehälter (4) umfasst, der dazu konfiguriert ist, die ausgeatmete Luft von einer Person aufzunehmen und die ausgeatmete Luft innerhalb des Gasbehälters zu speichern, bevor die ausgeatmete Luft durch die Gasmischeinrichtung aufgenommen wird, und wobei vorzugsweise die Druckeinstellvorrichtung dazu konfiguriert ist, den Druck der ausgeatmeten Luft, die innerhalb des Gasbehälters gespeichert ist, einzustellen.

5. Vorrichtung nach Anspruch 4, wenn er direkt von Anspruch 2 abhängt, wobei der Regler dazu konfiguriert ist, den Druck der innerhalb des Gasbehälters gespeicherten ausgeatmeten Luft einzustellen, indem er an den Gasbehälter über einen Gasbehältereinlass mindestens ein Gas unter Hochdruck liefert.

6. Vorrichtung nach einem vorstehenden Anspruch, wobei die Druckeinstellvorrichtung weiter einen externen Gasbehälter (170) umfasst, der in Fluidkommunikation mit dem Regler steht, wobei vorzugsweise der externe Gasbehälter in der Nähe der externen Fläche des Gasbehälters positioniert ist.

7. Vorrichtung nach Anspruch 6, wobei der externe Behälter dazu konfiguriert ist, die externe Fläche des Gasbehälters im Wesentlichen zu umgeben.

8. Vorrichtung nach Anspruch 6 oder Anspruch 7, wenn sie von Anspruch 2 abhängen, wobei der Regler dazu konfiguriert ist, an den externen Gasbehälter mindestens ein Gas unter Hochdruck zu liefern, sodass der Druck des Gases, der innerhalb des Gasbehälters gespeichert ist, erhöht wird.

9. Vorrichtung nach einem der Ansprüche 4 bis 5, wobei der Gasbehälter ein Filtersystem (218) umfasst, das dazu konfiguriert ist, Kohlendioxid aus der ausgeatmeten Luft zu speichern, und weiter dazu konfiguriert ist, das gespeicherte Kohlendioxid an die erste Gasmischerzufuhr abzugeben.

10. Vorrichtung nach Anspruch 9, wobei das Filtersystem ein erstes Filter (2002), das dazu konfiguriert ist, Kohlendioxid aus der ausgeatmeten Luft zu speichern, und ein zweites Filter (2004), das dazu konfiguriert ist, gespeichertes Kohlendioxid an die erste Gasmischerzufuhr abzugeben, umfasst.

11. Vorrichtung nach Anspruch 10, wenn er von Anspruch 2 abhängt, wobei der Regler dazu konfiguriert ist, an das zweite Filter mindestens ein Gas unter Hochdruck zu liefern, sodass der Druck des abgegebenen Kohlendioxids, das in die erste Gasmischerzufuhr eintritt, erhöht wird.

12. Vorrichtung nach einem der Ansprüche 10 bis 11, wobei der Gasbehälter eine Zwischengasspeichereinrichtung umfasst, die dazu konfiguriert ist, das gespeicherte Kohlendioxid aus dem Filtersystem aufzunehmen und das Kohlendioxid vorübergehend zu speichern, und die weiter dazu konfiguriert ist, das gespeicherte Kohlendioxid an die erste Gasmischerzufuhr abzugeben.

13. Vorrichtung nach einem vorstehenden Anspruch, wobei die zweite Gasmischerzufuhr ein Stickstofffilter (4000) umfasst, das dazu konfiguriert ist, Stickstoff aus der Luft, die von der zweiten Gasmischerzufuhr aufgenommen wird, zu speichern, und das weiter dazu konfiguriert ist, stickstoffreduzierte Luft aus einem Auslass in dem Stickstofffilter auszustoßen und die stickstoffreduzierte Luft über die zweite Gasmischerzufuhr an die Gasmischeinrichtung zu liefern.

14. Flugzeug, das die Vorrichtung nach einem der Ansprüche 1 bis 13 umfasst.

15. Verfahren zum Herstellen eines Belüftungsgasgemischs zur Verwendung in einem Flugzeug, umfassend die Schritte:
Aufnehmen von ausgeatmeter Luft von einer Person durch eine erste Gasmischerzufuhr, wobei die ausgeatmete Luft Kohlendioxid umfasst;
Aufnehmen eines Luftgemischs, das mindestens ein Gas umfasst, durch eine zweite Gasmischerzufuhr;
Erhöhen des Drucks der ausgeatmeten Luft, die Kohlendioxid umfasst, in der ersten Gasmischerzufuhr durch eine Druckeinstellvorrichtung, sodass er im Wesentlichen mit dem Druck des Luftgemischs in der zweiten Gasmischerzufuhr übereinstimmt
Aufnehmen der ausgeatmeten Luft, die Kohlendioxid umfasst, und des Luftgemischs aus der ersten und der zweiten Gasmischerzufuhr durch eine Gasmischeinrichtung;
Kombinieren der ausgeatmeten Luft, die Kohlendioxid umfasst, mit dem Luftgemisch durch die Gasmischeinrichtung, um ein Belüftungsgasgemisch zu bilden.

## Revendications

1. Appareil permettant de préparer un mélange de gaz de ventilation pour les pilotes et l'équipage d'un aéronef, l'appareil comprenant :
une première alimentation de mélangeur de gaz (10) configurée pour recevoir l'air expiré d'une personne, dans lequel l'air expiré comprend du dioxyde de carbone ;
une seconde alimentation de mélangeur de gaz (9) configurée pour recevoir un mélange d'air comprenant au moins un gaz ;
un dispositif de mélange de gaz (6) configuré pour recevoir l'air expiré comprenant du dioxyde de carbone et le mélange d'air provenant des première et seconde alimentations de mélangeur de gaz et combiner l'air expiré comprenant du dioxyde de carbone avec le mélange d'air dans le dispositif de mélange de gaz pour former un mélange de gaz de ventilation comprenant du dioxyde de carbone ; et
un dispositif de réglage de pression (14) configuré pour augmenter la pression de l'air expiré comprenant du dioxyde de carbone dans la première alimentation de mélangeur de gaz de sorte qu'elle corresponde sensiblement à la pression du mélange d'air dans la seconde alimentation de mélangeur de gaz.

2. Appareil selon la revendication 1 dans lequel le dispositif de réglage de pression comprend un régulateur (3).

3. Appareil selon la revendication 2 dans lequel le régulateur est configuré pour fournir au moins un gaz sous pression à la seconde alimentation de mélangeur de gaz.

4. Appareil selon une quelconque revendication précédente dans lequel la première alimentation de mélangeur de gaz comprend un réservoir de gaz (4) configuré pour recevoir l'air expiré d'une personne et stocker l'air expiré à l'intérieur du réservoir de gaz avant que l'air expiré ne soit reçu par le dispositif de mélange de gaz, et de préférence dans lequel le dispositif de réglage de pression est configuré pour régler la pression de l'air expiré stocké dans le réservoir de gaz.

5. Appareil selon la revendication 4 lorsqu'elle dépend directement de la revendication 2, dans lequel le régulateur est configuré pour
régler la pression de l'air expiré stocké à l'intérieur du réservoir de gaz en fournissant au moins un gaz à haute pression au réservoir de gaz par l'intermédiaire d'une entrée de réservoir de gaz.

6. Appareil selon une quelconque revendication précédente dans lequel le dispositif de réglage de pression comprend en outre un réservoir de gaz externe (170)
en communication fluidique avec
le régulateur, de préférence le réservoir de gaz externe est positionné de manière adjacente à la surface externe du réservoir de gaz.

7. Appareil selon la revendication 6 dans lequel le réservoir externe est configuré pour entourer sensiblement la surface externe du réservoir de gaz.

8. Appareil selon la revendication 6 ou la revendication 7 lorsqu'elle dépend de la revendication 2, dans lequel le régulateur est
configuré pour fournir au moins un gaz à haute pression au réservoir de gaz externe de manière à ce que la pression du gaz stocké à l'intérieur du réservoir de gaz soit augmentée.

9. Appareil selon l'une quelconque des revendications 4 à 5 dans lequel le réservoir de gaz comprend un système de filtrage (218)
configuré pour stocker du dioxyde de carbone de l'air expiré
et configuré en outre pour libérer le dioxyde de carbone stocké vers la première alimentation de mélangeur de gaz.

10. Appareil selon la revendication 9 dans lequel le système de filtrage comprend un premier filtre (2002) configuré pour stocker du dioxyde de carbone de l'air expiré et un second filtre (2004) configuré pour libérer du dioxyde de carbone stocké vers la première alimentation de mélangeur de gaz.

11. Appareil selon la revendication 10 lorsqu'elle dépend de la revendication 2, dans lequel le régulateur est configuré pour
fournir au moins un gaz à haute pression au second filtre de manière à ce que la pression du dioxyde de carbone libéré entrant dans la première alimentation de mélangeur de gaz soit augmentée.

12. Appareil selon l'une quelconque des revendications 10 à 11 dans lequel le réservoir de gaz comprend un dispositif de stockage de gaz intermédiaire configuré pour recevoir le dioxyde de carbone stocké du système de filtrage et stocker temporairement le dioxyde de carbone, et configuré en outre pour libérer le dioxyde de carbone stocké vers la première alimentation de mélangeur de gaz.

13. Appareil selon une quelconque revendication précédente dans lequel la seconde alimentation de mélangeur de gaz comprend un filtre à azote (4000) configuré pour stocker l'azote de l'air reçu de la seconde alimentation de mélangeur de gaz et configuré en outre pour évacuer l'air à teneur réduite en azote d'une sortie du filtre à azote et fournir l'air à teneur réduite en azote au dispositif de mélange de gaz par l'intermédiaire de la seconde alimentation de mélangeur de gaz.

14. Aéronef comprenant l'appareil selon l'une quelconque des revendications 1 à 13.

15. Procédé de préparation d'un mélange de gaz de ventilation destiné à être utilisé dans un aéronef, comprenant les étapes consistant à :
recevoir, par une première alimentation de mélangeur de gaz, de l'air expiré d'une personne, dans lequel l'air expiré comprend du dioxyde de carbone ;
recevoir, par une seconde alimentation de mélangeur de gaz, un mélange d'air comprenant au moins un gaz ;
augmenter, par un dispositif de réglage de pression, la pression de l'air expiré comprenant du dioxyde de carbone dans la première alimentation de mélangeur de gaz de sorte qu'elle corresponde sensiblement à la pression du mélange d'air dans la seconde alimentation de mélangeur de gaz
recevoir, par un dispositif de mélange de gaz, l'air expiré comprenant du dioxyde de carbone et le mélange d'air provenant des première et seconde alimentations de mélangeur de gaz ;
combiner, par le dispositif de mélange de gaz, l'air expiré comprenant du dioxyde de carbone et le mélange d'air pour former un mélange de gaz de ventilation.
